(19) Europäisches Patentamt
European Patent Office
Office européen des brevets

(11) **EP 4 045 889 B1**

(12) **EUROPÄISCHE PATENTSCHRIFT**

(45) Veröffentlichungstag und Bekanntmachung des Hinweises auf die Patenterteilung:
**26.06.2024   Patentblatt 2024/26**

(21) Anmeldenummer: 20797688.7

(22) Anmeldetag: **16.10.2020**

(51) Internationale Patentklassifikation (IPC):
***G01N 9/08*** *(2006.01)*

(52) Gemeinsame Patentklassifikation (CPC):
**G01N 9/08;** Y02P 10/25

(86) Internationale Anmeldenummer:
**PCT/EP2020/079260**

(87) Internationale Veröffentlichungsnummer:
**WO 2021/074410 (22.04.2021 Gazette 2021/16)**

(54) **MESSAUTOMAT, FERTIGUNGSANLAGE UND VERFAHREN**

AUTOMATIC MEASURING MACHINE, MANUFACTURING PLANT, AND METHOD

APPAREIL AUTOMATIQUE DE MESURE, INSTALLATION DE FABRICATION ET PROCÉDÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.10.2019   DE 102019215936**

(43) Veröffentlichungstag der Anmeldung:
**24.08.2022   Patentblatt 2022/34**

(73) Patentinhaber: **Dimensionics GmbH
73730 Esslingen (DE)**

(72) Erfinder:
• **WENZEL, Jan
73730 Esslingen (DE)**
• **WENZEL, Jörg
23992 Neukloster (DE)**

(74) Vertreter: **Patentanwälte Magenbauer & Kollegen Partnerschaft mbB
Plochinger Straße 109
73730 Esslingen (DE)**

(56) Entgegenhaltungen:
**CN-A- 109 883 881     US-A- 5 606 126
US-B1- 6 443 007**

EP 4 045 889 B1

**Beschreibung**

Die Erfindung betrifft einen Messautomaten zur Bestimmung der Dichte von Festkörper-Prüfstücken. Der Messautomat dient insbesondere zum Einsatz in einem industriellen Umfeld, beispielsweise in einer Fertigungshalle, in der zweckmäßigerweise eine industrielle Fertigung von Festkörper-Prüfstücken stattfindet. Bei den Festkörper-Prüfstücken handelt es sich beispielsweise um Werkstücke, insbesondere um Werkstücke, die mittels additiver Fertigung, insbesondere 3D-Druck, hergestellt sind. Der Begriff "Festkörper-Prüfstück" soll insbesondere zum Ausdruck bringen, dass das Prüfstück nicht flüssig ist. Ferner kann es sich bei den Festkörper-Prüfstücken um Werkstücke handeln, die mittels Sintern, Guss, Spritzguss oder einem anderen Verfahren hergestellt wurden.

Die US 5,606,126 betrifft eine Vorrichtung zum automatischen Messen einer Dichte eines Objekts.

Die CN 109 883 881 A betrifft eine Wägevorrichtung.

Eine Aufgabe der Erfindung besteht darin, einen Messautomaten bereitzustellen, der eine effiziente Bestimmung der Dichte einer Mehrzahl von Festkörper-Prüfstücke ermöglicht.

Die Aufgabe wird gelöst durch einen Messautomaten gemäß Anspruch 1. Der Messautomat dient der automatisierten Bestimmung der jeweiligen Dichte einer Mehrzahl von Festkörper-Prüfstücken. Der Messautomat umfasst eine Messanordnung mit einer Trockenwaage-Einrichtung und einer Nasswaage-Einrichtung. Der Messautomat umfasst ferner ein Prüfstück-Magazin zur Aufnahme der Mehrzahl von Festkörper-Prüfstücken. Der Messautomat umfasst ferner eine Zuführeinheit zum Zuführen der Festkörper-Prüfstücke von dem Prüfstück-Magazin zu der Messanordnung. Der Messautomat ist ausgebildet, mit der Zuführeinheit sequentiell die Festkörper-Prüfstücke der Messanordnung zuzuführen. Der Messautomat ist ferner ausgebildet, unter Verwendung der Trockenwaage-Einrichtung und der Nasswaage-Einrichtung die Festkörper-Prüfstücke zu wiegen, um für jedes Festkörper-Prüfstück jeweilige Wäge-Messwerte zu erhalten. Der Messautomat ist ferner ausgebildet, für jedes Festkörper-Prüfstück auf Basis der jeweiligen Wäge-Messwerte einen jeweiligen Dichtewert zu bestimmen.

Mit dem beschriebenen Messautomaten ist eine effiziente Bestimmung der Dichte einer Mehrzahl von Festkörper-Prüfstücken möglich. Der Messautomat ist insbesondere ausgebildet, die Dichte der Festkörper-Prüfstücke vollautomatisiert zu bestimmen. Insbesondere ist der Messautomat ausgebildet, die Festkörper-Prüfstücke für die Bestimmung der Dichte vollautomatisiert zu handhaben.

Das Prüfstück-Magazin umfasst eine Mehrzahl an Prüfstück-Trägern, die jeweils zur Aufnahme eines jeweiligen Prüfstücks dienen und wobei die Zuführeinheit ausgebildet ist, die Prüfstück-Träger sequentiell aus dem Prüfstück-Magazin zu entnehmen, um die Prüfstücke im jeweiligen Prüfstück-Träger der Messanordnung zuzuführen.

Vorteilhafte Weiterbildungen sind Gegenstand der Unteransprüche.

Bevorzugt umfasst der Messautomat ein Messautomat-Gehäuse, das einen Arbeitsraum umgibt, in dem die Messanordnung und das Prüfstück-Magazin angeordnet sind.

Bevorzugt umfasst der Messautomat eine Schwingungsdämpfungs-Aufhängung, die die Nasswaage-Einrichtung trägt und ausgebildet ist, aus der Umgebung des Messautomaten stammende mechanische Schwingungen zu dämpfen, um deren Einfluss auf die Wäge-Messwerte zu verringern.

Bevorzugt umfasst der Messautomat eine Rahmenstruktur, mit der das Prüfstück-Magazin und die Zuführeinheit gegenüber einem Boden, auf dem der Messautomat steht, abgestützt sind, und wobei die Nasswaage-Einrichtung von der Rahmenstruktur schwingungsentkoppelt ist.

Bevorzugt umfasst der Messautomat einen Arbeitsraum-Boden, auf dem das Prüfstück-Magazin steht, wobei der Arbeitsraum-Boden eine Nasswaage-Aussparung umfasst, durch die sich ein Nasswaage-Aufbau erstreckt, der die Schwingungsdämpfungs-Aufhängung und die Nasswaage-Einrichtung umfasst.

Bevorzugt ist der Messautomat ausgebildet, das Wiegen jedes Prüfstücks unter Verwendung der Trockenwaage-Einrichtung und der Nasswaage-Einrichtung in einem Zustand durchzuführen, in dem sich das Prüfstück innerhalb eines Aufnahmebereichs des jeweiligen Prüfstück-Trägers befindet.

Bevorzugt umfassen die Trockenwaage-Einrichtung und/oder die Nasswaage-Einrichtung jeweils eine Prüfstück-Hebestruktur, die beim Wiegen eines Festkörper-Prüfstücks in den jeweiligen Prüfstück-Träger greift und, insbesondere beim Absenken des jeweiligen Prüfstück-Trägers, ein Anheben des Festkörper-Prüfstück relativ zum Prüfstück-Träger bewirkt.

Bevorzugt umfasst die Nasswaage-Einrichtung ein mit einer Flüssigkeit gefülltes Becken, eine außerhalb des Beckens angeordnete erste Waageeinheit und eine von der ersten Waageeinheit in das Becken führende Kraftübertragungsstruktur umfasst, die ausgebildet ist, beim Wiegen eines Festkörper-Prüfstücks mit der Nasswaage-Einrichtung die von dem Festkörper-Prüfstück in der Flüssigkeit auf die Kraftübertragungsstruktur ausgeübte Kraft aus dem Becken auf die erste Waageeinheit zu übertragen.

Bevorzugt umfasst die Nasswaage-Einrichtung ein/das Becken sowie eine in dem Becken angeordnete erste Prüfstück-Hebestruktur, die beim Wiegen eines Festkörper-Prüfstücks in einen jeweiligen Prüfstück-Träger greift und, insbesondere beim Absenken des jeweiligen Prüfstück-Trägers, ein Anheben des Festkörper-Prüfstücks relativ zu dem Prüfstück-Träger bewirkt.

Bevorzugt umfasst die Nasswaage-Einrichtung ein/das Becken sowie eine Flüssigkeitspegel-Regeleinrichtung zur Regelung des Flüssigkeitspegels des Beckens.

Bevorzugt ist der Messautomat ausgebildet, zum Wiegen des Festkörper-Prüfstücks mit der Nasswaage-Einrichtung das Festkörper-Prüfstück zusammen mit einem/dem jeweiligen Prüfstück-Träger in die Flüssigkeit des Beckens einzutauchen und nach dem Eintauchen des Prüfstück-Trägers die Regelung des Flüssigkeitspegels durchzuführen.

Bevorzugt umfasst die Nasswaage-Einrichtung ein/das Becken und einer/der Flüssigkeit, mit der das Becken gefüllt ist, ist ein Tensid beigemischt.

Bevorzugt ist der Messautomat ausgebildet, auf Basis einer Auswahlinformation, die eine oder mehrere Prüfstück-Plätze des Prüfstück-Magazins anzeigt, die Bestimmung der Dichte für diejenigen Festkörper-Prüfstücke durchzuführen, die sich an den Prüfstück-Plätzen befinden, die durch die Auswahlinformation bestimmten angezeigt werden.

Bevorzugt umfasst der Messautomat eine Schnittstelle, insbesondere eine Benutzerschnittstelle, zur Eingabe der Auswahlinformation.

Bevorzugt sind im Prüfstück-Magazin eine Mehrzahl von mittels additiver Fertigung hergestellter Festkörper-Prüfstücke angeordnet.

Der Messautomat ist bevorzugt ausgebildet, auf Basis der bestimmten Dichtewerte jeweils die Fertigungsqualität des jeweiligen Festkörper-Prüfstücks zu beurteilen und eine Beurteilungsinformation bereitzustellen.

Die Erfindung betrifft ferner eine Fertigungsanlage, umfassend eine Fertigungshalle, eine in der Fertigungshalle angeordnete Fertigungsvorrichtung zur Fertigung von Festkörper-Prüfstücken sowie ein in der Fertigungshalle angeordneter Messautomat, der wie vorstehend beschrieben ausgeführt ist.

Die Erfindung betrifft ferner ein Verfahren nach Anspruch 14 zum automatisierten Bestimmen der jeweiligen Dichte einer Mehrzahl von Festkörper-Prüfstücken, umfassend die Schritte: Zuführen, mittels einer Zuführeinheit, der Festkörper-Prüfstücke von einem Prüfstück-Magazin zu einer Messanordnung, die eine Trockenwaage-Einrichtung und eine Nasswaage-Einrichtung umfasst, Wiegen der Festkörper-Prüfstücke unter Verwendung der Trockenwaage-Einrichtung und der Nasswaage-Einrichtung, um für jedes Festkörper-Prüfstück jeweilige Wäge-Messwerte zu erhalten, und Bestimmen für jedes Festkörper-Prüfstück eines jeweiligen Dichtewerts auf Basis der jeweiligen Wäge-Messwerte.

Die Erfindung betrifft ferner ein Verfahren nach Anspruch 15 zur Beurteilung der Fertigungsqualität eines mittels eines additiven Verfahrens hergestellten Festkörper-Prüfstücks, umfassend die Schritte: Wiegen des Festkörper-Prüfstücks mit einer Trockenwaage-Einrichtung und einer Nasswaage-Einrichtung, um Wäge-Messwerte zu erhalten, Beurteilen der Fertigungsqualität des Festkörper-Prüfstücks auf Basis der Wäge-Messwerte und Bereitstellen einer Beurteilungsinformation über die Fertigungsqualität des Festkörper-Prüfstücks. Zweckmäßigerweise zeigt die Beurteilungsinformation an, ob das Festkörper-Prüfstück eine vorgegebene Fertigungsqualität erreicht. Exemplarisch zeigt die Beurteilungsinformation an, ob das Festkörper-Prüfstück einen Einschluss, beispielsweise einen Lufteinschluss, aufweist. Das Festkörper-Prüfstück ist beispielsweise ein Werkstück.

Weitere exemplarische Details sowie beispielhafte Ausführungsformen werden nachstehend unter Bezugnahme auf die Figuren erläutert. Dabei zeigt

Figur 1    eine perspektivische Ansicht eines Messautomaten,

Figur 2    eine Vorderansicht des Messautomaten,

Figur 3    eine perspektivische Ansicht des Messautomaten von oben,

Figur 4    eine perspektivische Ansicht einer Anordnung aus einer Zuführeinheit, einem Prüfstück-Magazin, einer Trockenwaage-Einrichtung und einer Nasswaage-Einrichtung,

Figur 5    eine perspektivische Ansicht einer Anordnung aus dem Prüfstück-Magazin, der Trockenwaage-Einrichtung und der Nasswaage-Einrichtung,

Figur 6    eine perspektivische Ansicht des Prüfstück-Magazins,

Figur 7    eine perspektivische Ansicht eines Nasswaage-Aufbaus mit einer Abdeckung,

Figur 8    eine perspektivische Ansicht des Nasswaage-Aufbaus ohne Abdeckung,

Figur 9    eine perspektivische Ansicht eines Beckens und einer Kraftübertragungsstruktur der Nasswaage-Einrichtung,

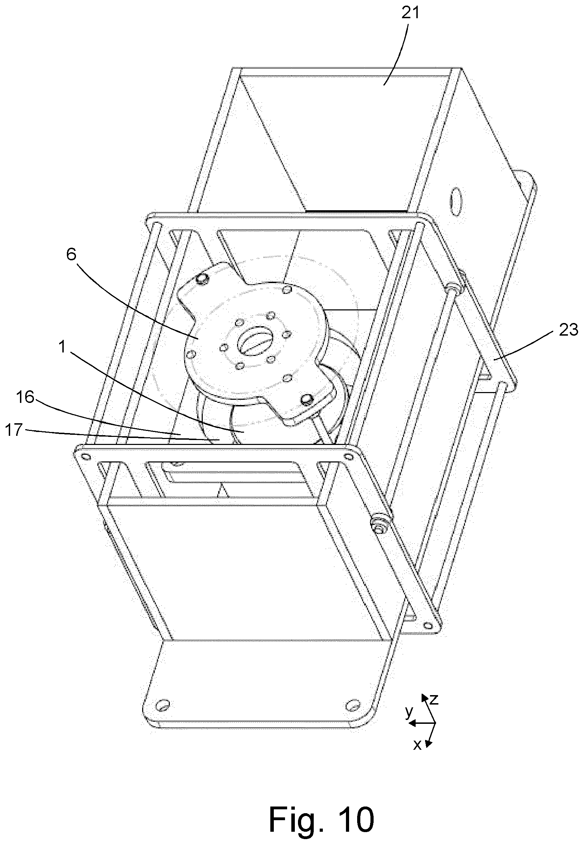

Figur 10    eine perspektivische Ansicht des Beckens mit eingesetztem Prüfstück-Träger und Greifer,

Figur 11    eine Schnittansicht des Beckens mit eingesetztem Prüfstück-Träger und Greifer,

Figur 12    eine Ansicht von oben auf das Becken mit eingesetztem Prüfstück-Träger ohne Greifer und ohne Festkörper-Prüfstück,

Figur 13    eine perspektivische Ansicht der Trockenwaage-Einrichtung,

Figur 14    eine perspektivische Ansicht der Trockenwaage-Einrichtung mit aufgelegtem Prüfstück-Träger und Greifer,

Figur 15    eine Vorderansicht der Trockenwaage-Einrichtung mit aufgelegtem Prüfstück-Träger und Greifer,

Figur 16    eine schematische Darstellung einer Fertigungsanlage, und

Figur 17    ein Flussdiagramm eines Verfahrens.

Im Folgenden wird Bezug genommen auf die in den Figuren eingezeichneten Raumrichtungen "x-Richtung", "y-Richtung" und "z-Richtung", die orthogonal zueinander ausgerichtet sind. Die x-Richtung kann auch als Breitenrichtung, die y-Richtung als Tiefenrichtung und die z-Richtung als Höhenrichtung bezeichnet werden. Die x-Richtung und die y-Richtung sind horizontale Richtungen; die z-Richtung ist eine vertikale Richtung.

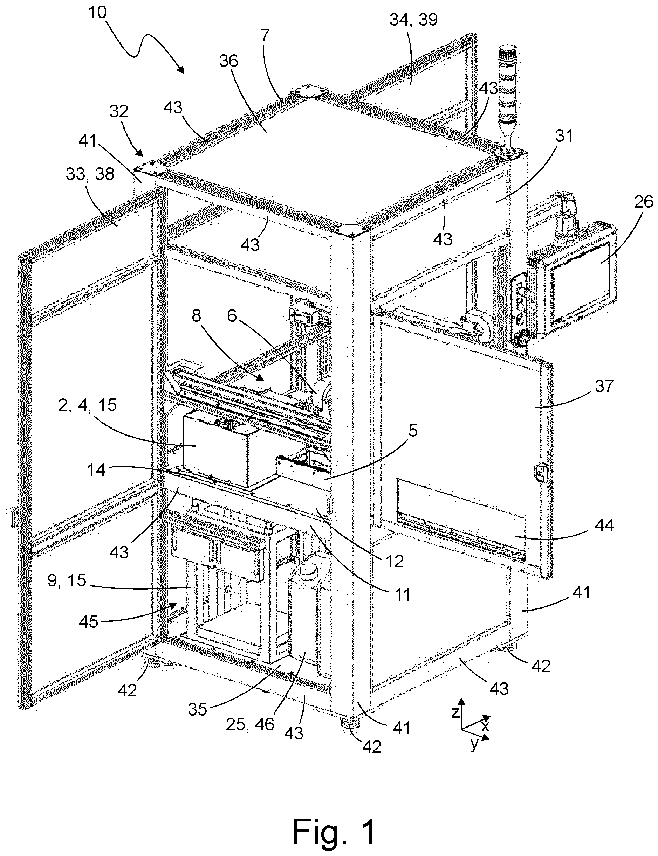

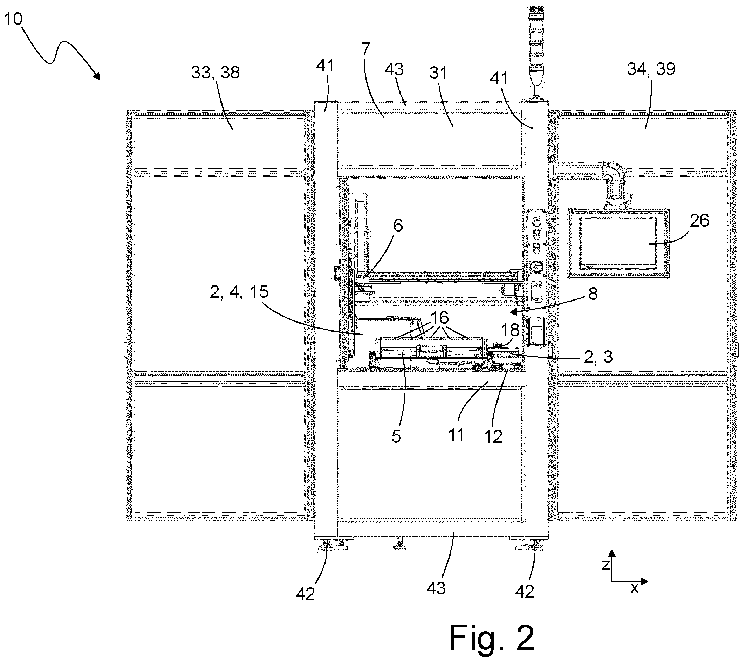

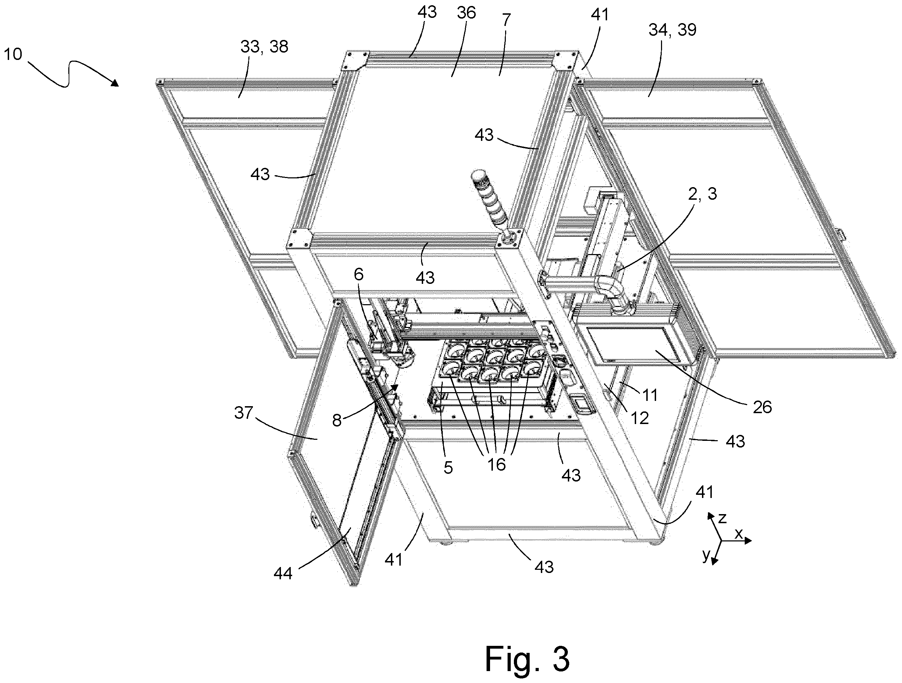

Die Figuren 1 bis 3 zeigen einen Messautomaten 10 gemäß einer exemplarischen Ausführungsform. Der Messautomat 10 ist insbesondere ausgebildet, eine automatisierte Bestimmung der jeweiligen Dichte einer Mehrzahl von Festkörper-Prüfstücken 1 durchzuführen. Der Messautomat 10 umfasst eine Messanordnung 2 mit einer Trockenwaage-Einrichtung 3 und einer Nasswaage-Einrichtung 4. Der Messautomat 10 umfasst ferner ein Prüfstück-Magazin 5 zur Aufnahme der Mehrzahl von Festkörper-Prüfstücken 1. Der Messautomat 10 umfasst ferner eine Zuführeinheit 6 zum Zuführen der Festkörper-Prüfstücke 1 von dem Prüfstück-Magazin 5 zu der Messanordnung 2.

Vorzugsweise ist der Messautomat 10 ausgebildet, mit der Zuführeinheit 6 automatisiert die Festkörper-Prüfstücke 1 von dem Prüfstück-Magazin 5 zu der Messanordnung 2 zu befördern. Insbesondere ist der Messautomat 10 ausgebildet, die Festkörper-Prüfstücke 1 sequentiell von dem Prüfstück-Magazin 5 zu der Messanordnung 2 zu befördern. Insbesondere befördert der Messautomat 10 die Festkörper-Prüfstücke 1 jeweils einzeln von dem Prüfstück-Magazin 5 zu der Messanordnung 2, insbesondere (nacheinander) zu der Trockenwaage-Einrichtung 3 und zu der Nasswaage-Einrichtung 4 und dann zweckmäßigerweise zurück zu dem Prüfstück-Magazin 5. Exemplarisch schließt der Messautomat 10 die Zuführung eines Festkörper-Prüfstücks 1 zu der Messanordnung 2 und zurück zu dem Prüfstück-Magazin 5 ab, bevor der Messautomat 10 ein nächstes Festkörper-Prüfstück 1 der Messanordnung 2 zuführt.

Der Messautomat 10 ist zweckmäßigerweise ausgebildet, unter Verwendung der Trockenwaage-Einrichtung 3 und der Nasswaage-Einrichtung 4 die Festkörper-Prüfstücke 1 automatisiert zu wiegen, um für jedes Festkörper-Prüfstück 1 jeweilige Wäge-Messwerte, insbesondere einen Trockenwäge-Messwert und einen Nasswäge-Messwert, zu erhalten. Der Messautomat 10 ist vorzugsweise ausgebildet, für jedes Festkörper-Prüfstück 1 automatisiert auf Basis der jeweiligen Wäge-Messwerte einen jeweiligen Dichtewert zu bestimmen, insbesondere zu berechnen. Gemäß einer bevorzugten Ausgestaltung ist der Messautomat 10 ausgebildet, das Zuführen und Wiegen des Festkörper-Prüfstücks 1 und das Bestimmen der Dichte vollautomatisiert - also ohne Benutzereingriff - durchzuführen.

Nachstehend sollen weitere exemplarische Details erläutert werden:
Der Messautomat 10 ist beispielsweise ausgebildet, unter Anwendung des archimedischen Prinzips den Dichtewert auf Basis des Trockenwäge-Messwerts und des Nasswäge-Messwerts zu berechnen. Beispielsweise ist der Messautomat 10 ausgebildet, den folgenden Zusammenhang zu nutzen:

$$\rho = \frac{F_l \rho_w - F_w \rho_l}{F_l - F_w},$$

Hierbei ist $\rho$ die Dichte des Festkörper-Prüfstücks 1, $\rho_w$ die Dichte der Flüssigkeit 19 der Nasswaage-Einrichtung 4, $\rho_l$ die Dichte der Luft (beispielsweise im Arbeitsraum 8), $F_l$ die dem Trockenwäge-Messwert zugrundeliegende Gewichtskraft des Festkörper-Prüfstücks 1 in der Luft und $F_w$ die dem Nasswäge-Messwert zugrundeliegende Gewichtskraft des Festkörper-Prüfstücks 1 im Wasser.

Gemäß einer bevorzugten Ausgestaltung ist der Messautomat 10 ausgebildet, auf Basis des bestimmten Dichtewerts jeweils eine Fertigungsqualität des jeweiligen Festkörper-Prüfstücks 1 zu beurteilen und eine Beurteilungsinformation bereitzustellen. Beispielsweise ist der Messautomat 10 ausgebildet, den bestimmten Dichtewert mit einem Vorgabewert, insbesondere einem Vorgabewertebereich, zu vergleichen und auf Basis des Vergleichs die Beurteilungsinformation bereitzustellen. Die Beurteilungsinformation zeigt zweckmäßigerweise an, ob ein Festkörper-Prüfstück eine vorgegebene Dichte aufweist und/oder in einem vorgegebenen Dichtebereich liegt.

Zweckmäßigerweise erfolgt die Beurteilung der Fertigungsqualität auf Basis des Dichtewerts anstelle einer (konventionellen) Fertigungsqualität-Beurteilung mittels eines Schnittbildes. Insbesondere schließt der Messautomat 10 auf Basis des Dichtewerts darauf, ob das Festkörper-Prüfstück 1 einen oder mehrere Einschlüsse, beispielsweise Lufteinschlüsse, aufweist und stellt eine Beurteilungsinformation bereit, die dies anzeigt. Die Beurteilung der Fertigungsqualität auf Basis des Dichtewerts hat gegenüber der konventionellen Schnittbild-Beurteilung insbesondere den Vorteil, dass sie zerstörungsfrei und/oder schneller erfolgen kann.

Die Beurteilung der Fertigungsqualität wird insbesondere für ein additiv gefertigtes Festkörper-Prüfstück durchgeführt.

Gemäß einer möglichen Ausgestaltung umfasst der Messautomat 10 einen ersten Temperatursensor, der die Temperatur der Flüssigkeit 19 misst, einen zweiten Temperatursensor, der die Temperatur der Luft im Arbeitsraum 8 misst und/oder einen Luftdrucksensor, der den Luftdruck im Arbeitsraum 8 misst. Der Messautomat 10 ist zweckmäßigerweise ausgebildet, die Dichte unter Berücksichtigung eines oder mehrere Sensorwerte zu berechnen, die mittels des ersten Temperatursensors, des zweiten Temperatursensors und/oder des Luftdrucksensors erfasst werden.

Zweckmäßigerweise ist der Messautomat 10 ausgebildet, die Dichte mit einer Wiederholgenauigkeit von 0,5 mg/cm^3 oder weniger und/oder einer Auflösung von 0,1 mg/cm^3 oder weniger zu bestimmen.

Im Folgenden soll näher auf einen exemplarischen Aufbau des Messautomaten 10 eingegangen werden. Der Messautomat 10 umfasst exemplarisch ein Messautomat-Gehäuse 7. Der Messautomat 10, insbesondere das Messautomat-Gehäuse 7, weist exemplarisch eine quaderförmige Grundgestalt auf, wobei die Höhe zweckmäßigerweise größer ist, insbesondere wenigstens zweimal so groß, wie die Breite und/oder Tiefe des Messautomaten. Beispielsweise ist der Messautomat, insbesondere das Messautomat-Gehäuse 7, wenigstens 1,60 m hoch und/oder wenigstens 80 cm tief und/oder breit.

Das Messautomat-Gehäuse 7 umfasst exemplarisch vier Umfangswände: eine Vorderwand 31, eine Rückwand 32, eine erste Seitenwand 33 und eine zweite Seitenwand 34. Die Umfangswände sind zweckmäßigerweise vollständig schließbar und dienen insbesondere dazu, die Messanordnung, insbesondere die Nasswaage-Einrichtung 4 vor Luftschwingungen zu schützen. Die Vorderwand 31 und die Rückwand 32 sind parallel zueinander ausgerichtet, insbesondere senkrecht zur y-Richtung. Die erste Seitenwand 33 und die zweite Seitenwand 34 sind (im geschlossenen Zustand der zugehörigen Türen) parallel zueinander ausgerichtet, insbesondere senkrecht zur x-Richtung. Das Messautomaten-Gehäuse 7 umfasst exemplarisch einen Gehäuse-Boden 35, von dem aus sich die vier Umfangswände in z-Richtung nach oben erstrecken. Der Gehäuse-Boden ist senkrecht zur z-Richtung ausgerichtet. Das Messautomaten-Gehäuse 7 umfasst ferner eine Gehäuse-Decke 36, die zweckmäßigerweise den oberen Abschluss des Messautomaten-Gehäuses 7 bildet und bis zu der sich die Umfangswände vertikal erstrecken. Die Gehäuse-Decke 36 ist senkrecht zur z-Richtung ausgerichtet.

Die Vorderwand 31 umfasst exemplarisch eine Vordertür 37, die erste Seitenwand 33 umfasst exemplarisch eine erste Seitentür 38 und die zweite Seitenwand 34 umfasst exemplarisch eine zweite Seitentür 39. Die Vordertür 37, die erste Seitentür 38 und/oder die zweite Seitentür 39 sind zweckmäßigerweise um eine jeweilige parallel zur z-Richtung verlaufende Schwenkachse verschwenkbar gelagert. In den Figuren 1 bis 3 sind die Vordertür 37, die erste Seitentür 38 und die zweite Seitentür 39 in einem geöffneten Zustand gezeigt. In der Vorderwand 31, insbesondere der Vordertür 37, ist exemplarisch eine Bestückungsöffnung 44, insbesondere eine Bestückungsluke, vorhanden, über die eine Bestückung des Messautomaten 10 mit Festkörper-Prüfstücken 1 möglich ist. Zweckmäßigerweise verfügt der Messautomat 10 über einen Öffnungsmechanismus um die Bestückungsöffnung 44 automatisiert zu öffnen und/oder zu schließen.

Der Messautomat 10 umfasst eine Rahmenstruktur 11, mit der die Trockenwaage-Einrichtung 3, das Prüfstück-Magazin 5 und/oder die Zuführeinheit 6 gegenüber dem Boden, auf dem der Messautomat 10 steht, abgestützt werden. Die Rahmenstruktur 11 ist insbesondere als Grundgestell ausgeführt. Die Rahmenstruktur 11 bildet exemplarisch Teil des Messautomaten-Gehäuses 7. Die Rahmenstruktur 11 umfasst exemplarisch vier in z-Richtung ausgerichtete längliche Vertikal-Trägerelemente 41, die vorzugsweise als Stranggussprofile, insbesondere als Aluminiumstranggussprofile, ausgeführt sind. Die Vertikal-Trägerelemente 41 bilden exemplarisch die parallel zur z-Richtung verlaufenden Kanten der quaderförmigen Grundgestalt des Messautomaten 10. An der Unterseite der Vertikal-Trägerelemente 41 sind exemplarisch Standfüße 42 angeordnet. Die Rahmstruktur 11 umfasst ferner eine Mehrzahl von länglichen Horizontal-Trägerelementen 43, exemplarisch wenigstens vier, acht oder zwölf Horizontal-Trägerelemente 43. Die Horizontal-Trägerelemente 43 sind jeweils in eine horizontale Richtung ausgerichtet und zweckmäßigerweise als Stranggussprofile, insbesondere als Aluminiumstranggussprofile ausgeführt. Die Horizontal-Trägerelemente 43 werden von den Vertikal-Trägerelementen 41 abgestützt und sind insbesondere an diesen befestigt. Zweckmäßigerweise sind jeweils vier Horizontal-Trägerelemente 43 auf der gleichen Höhe angeordnet und bilden zusammen insbesondere einen rechteckigen oder quadratischen Rahmen. Vorzugsweise wird der Gehäuse-Boden 35 und/oder die Gehäuse-Decke 36 von den Vertikal-Trägerelementen 41 und/oder den Horizontal-Trägerelementen 43 abgestützt. Der Messautomat 10 umfasst ferner einen Arbeitsraum-Boden 12, der zweckmäßigerweise von den Vertikal-Trägerelementen 41 und/oder den Horizontal-Trägerelementen 43 abgestützt wird.

Der Messautomat 10 umfasst einen Arbeitsraum 8, in dem zweckmäßigerweise das Prüfstück-Magazin 5, die Messanordnung 2, insbesondere die Trockenwaage-Einrichtung 3 und die Nasswaage-Einrichtung 4, und die Zuführeinheit 6 angeordnet sind. Der Arbeitsraum 8 hat exemplarisch eine quaderförmige Grundgestalt. Der Arbeitsraum 8 wird von dem Messautomat-Gehäuse 7, insbesondere den Umfangswänden, umgeben. Der Messautomat 10 ist zweckmäßigerweise ausgebildet, den Arbeitsraum 8 in einen vollständig gegenüber der Umgebung des Messautomaten 10 verschlossenen Zustand zu versetzen, beispielsweise durch Schließen der Bestückungsöffnung 44. In diesem Zustand ist die Nasswaage-Einrichtung 4 vor Luftschwingungen geschützt. Nach unten wird der Arbeitsraum 8 von dem Arbeitsraum-Boden 12 begrenzt. Das Prüfstück-Magazin 5 und die Trockenwaage-Einrichtung 3 stehen zweckmäßigerweise auf dem Arbeitsraum-Boden 12. Exemplarisch nimmt der Arbeitsraum 8 wenigstens 30%, insbesondere wenigstens 50% der vertikalen Erstreckung des Messautomat-Gehäuses 7 ein. Der Arbeitsraum-Boden 12 befindet sich exemplarisch auf einer Höhe von wenigstens 20% der Höhe des Messautomat-Gehäuses 7. Vorzugsweise befindet sich der Arbeitsraum 8 auf einer für einen stehenden Benutzer geeigneten Arbeitshöhe, so dass ein stehender Benutzer in den Arbeitsraum 8 greifen kann, beispielsweise durch die Bestückungsöffnung 44.

Der von den Umfangswänden umgebene Arbeitsraum 8 dient insbesondere dafür, die Nasswaage-Einrichtung 4 vor Luftschwingungen der Umgebung des Messautomaten 10 zu schützen. Hierdurch kann eine Beeinträchtigung der Messergebnisse durch Luftschwingungen verhindert werden. Dadurch, dass sich das Prüfstück-Magazin 5 im Arbeitsraum 8 befindet, kann ein schneller Transport der Festkörper-Prüfstücke 1 zu der Messanordnung 2 erzielt werden.

Der Messautomat 10 umfasst ferner einen Versorgungsraum 45. Der Versorgungsraum 45 wird von dem Messautomat-Gehäuse 7, insbesondere den Umfangswänden, umgeben. Der Versorgungsraum 45 befindet sich insbesondere unter dem Arbeitsraum 8. Exemplarisch wird der Versorgungsraum 45 nach oben von dem Arbeitsraum-Boden 12 begrenzt und nach unten zweckmäßigerweise von dem Gehäuse-Boden 35.

Exemplarisch umfasst der Messautomat 10 wenigstens einen Flüssigkeitsbehälter 46, der zweckmäßigerweise im Versorgungsraum 45 angeordnet ist. Der Flüssigkeitsbehälter 46 umfasst zweckmäßigerweise Flüssigkeit für die Nasswaage-Einrichtung 4 und ist zweckmäßigerweise mit der Nasswaage-Einrichtung 4 fluidisch verbunden, insbesondere über eine Pumpe. Der Flüssigkeitsbehälter 46 ist exemplarisch Teil einer Flüssigkeitspegel-Regeleinrichtung 25.

Gemäß einer möglichen Ausgestaltung ist der Flüssigkeitsbehälter 46 ein Zuführbehälter und der Messautomat kann zusätzlich dazu einen Ablassbehälter umfassen, der im Versorgungsraum 45 angeordnet sein kann. Der Messautomat ist zweckmäßigerweise ausgebildet, Flüssigkeit aus dem Zuführbehälter in das Becken 21 zu befördern und/oder Flüssigkeit 19 aus dem Becken 21 in den Ablassbehälter abzulassen, insbesondere mittels der Flüssigkeitspegel-Regeleinrichtung 25.

Exemplarisch umfasst der Messautomat 10 eine Schnittstelle 26, die insbesondere als Benutzerschnittstelle ausgeführt ist. Exemplarisch umfasst die Schnittstelle 26 eine Anzeige und/oder eine Bedieneinrichtung. Vorzugsweise umfasst die Schnittstelle 26 einen Touchscreen. Die Schnittstelle 26, insbesondere die Benutzerschnittstelle, ist exemplarisch außen am Messautomat-Gehäuse 7 angebracht, vorzugsweise auf Höhe des Arbeitsraums 8.

Bevorzugt kann über die Schnittstelle 26 eine Auswahlinformation eingegeben werden, die eine oder mehrere Prüfstück-Plätze des Prüfstück-Magazins 5 bestimmt. Der Messautomat 10 ist zweckmäßigerweise ausgebildet, auf Basis der Auswahlinformation die Bestimmung der Dichte für die Festkörper-Prüfstücke 1 durchzuführen, die sich an den durch die Auswahlinformation bestimmten Prüfstück-Plätzen befinden.

Zweckmäßigerweise ist der Messautomat 10 ausgebildet, über die Schnittstelle 26 die Wäge-Messwerte und/oder den Dichtewert und/oder die Beurteilungsinformation auszugeben, insbesondere anzuzeigen.

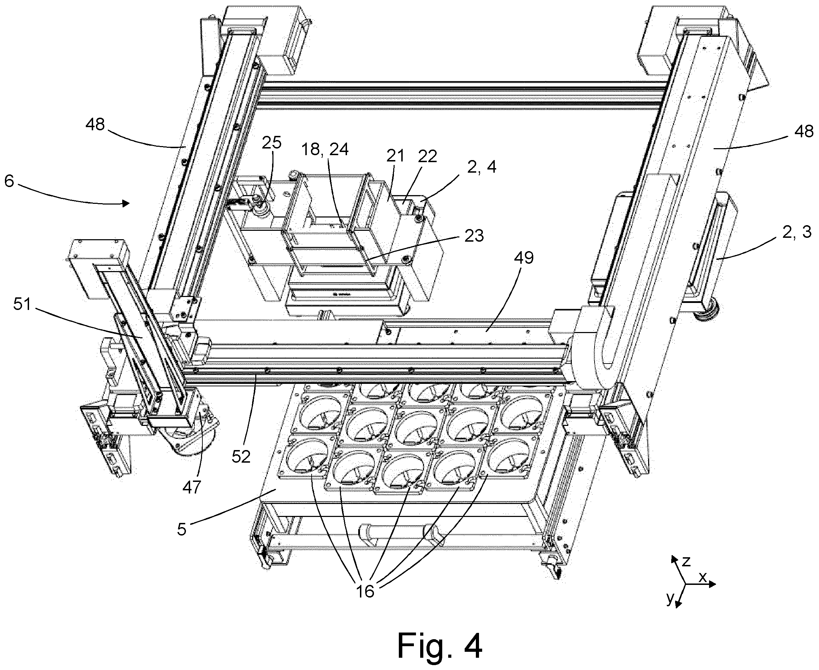

Die Figur 4 zeigt, wie die Messanordnung 2, das Prüfstück-Magazin 5 und die Zuführeinheit 6 zueinander angeordnet sind. Exemplarisch befinden sich die Messanordnung 2 und das Prüfstück-Magazin 5 in der gleichen x-y-Ebene und sind in x-Richtung und/oder y-Richtung versetzt zueinander angeordnet. Exemplarisch ist das Prüfstück-Magazin 5 in y-Richtung vor der Messanordnung 2 angeordnet. Die Trockenwaage-Einrichtung 3 und die Nasswaage-Einrichtung 4 sind zweckmäßigerweise voneinander beabstandet und zweckmäßigerweise in x-Richtung zueinander versetzt angeordnet. Die Zuführeinheit 6 ist zweckmäßigerweise in z-Richtung über dem Arbeitsraum-Boden 12, insbesondere über der Messanordnung 2 und/oder dem Prüfstück-Magazin 5 angeordnet.

Die Zuführeinheit 6 ist exemplarisch als Robotereinrichtung, insbesondere als Portalroboter ausgeführt. Zweckmäßigerweise umfasst die Zuführeinheit 6 einen Greifer 47, der in einer x-y-Ebene und zweckmäßigerweise in z-Richtung verfahrbar ist. Die Zuführeinheit 6 umfasst exemplarisch vier Achsen: zwei horizontale Achsen, die zweckmäßigerweise orthogonal zueinander ausgerichtet sind und von denen exemplarisch eine parallel zur x-Achse und ein andere parallel zur y-Achse verläuft, eine vertikale Achse und eine insbesondere parallel zur z-Richtung verlaufenden Drehachse.

Die Zuführeinheit 6 ist zweckmäßigerweise ausgebildet, Prüfstück-Träger 16 sequentiell aus dem Prüfstück-Magazin 5 zu entnehmen, um die Festkörper-Prüfstücke 1 in einem jeweiligen Prüfstück-Träger 16 sequentiell der Messanordnung 2 zuzuführen. Insbesondere ist die Zuführeinheit 6 ausgebildet, jedes Festkörper-Prüfstück 1 im jeweiligen Prüfstück-Träger der Trockenwaage-Einrichtung 3 und der Nasswaage-Einrichtung 4 zuzuführen, um dort im Prüfstück-Träger 16 ein jeweiliges Wiegen des Festkörper-Prüfstücks 1 zu ermöglichen. Zweckmäßigerweise ist die Zuführeinheit 6 ausgebildet, für das Wiegen des Festkörper-Prüfstücks 1 mit der Nasswaage-Einrichtung 4 das Festkörper-Prüfstück 1 zusammen mit dem Prüfstück-Träger 16 und zweckmäßigerweise dem Greifer 47 in die Flüssigkeit 19 der Nasswaage-Einrichtung 4 einzutauchen. Der Greifer 47 wird zumindest teilweise in die Flüssigkeit 19 eingetaucht.

Exemplarisch umfasst die Zuführeinheit 6 zwei Linearführungen 48, die parallel zueinander, insbesondere parallel zur y-Richtung verlaufen. Die Zuführeinheit 6 umfasst einen Schlitten, insbesondere einen Portalschlitten, der entlang der Linearführungen 48 - also insbesondere in y-Richtung - verfahrbar ist. Der Schlitten 49 umfasst einen Greiferarm 51 und eine orthogonal zu den Linearführungen 48 verlaufende Querführung 52, entlang der der Greiferarm 51 verfahrbar ist. Der Greiferarm 51 umfasst den Greifer 47, der zweckmäßigerweise in z-Richtung verfahrbar ist und/oder um die parallel zur z-Richtung verlaufende Drehachse drehbar ist.

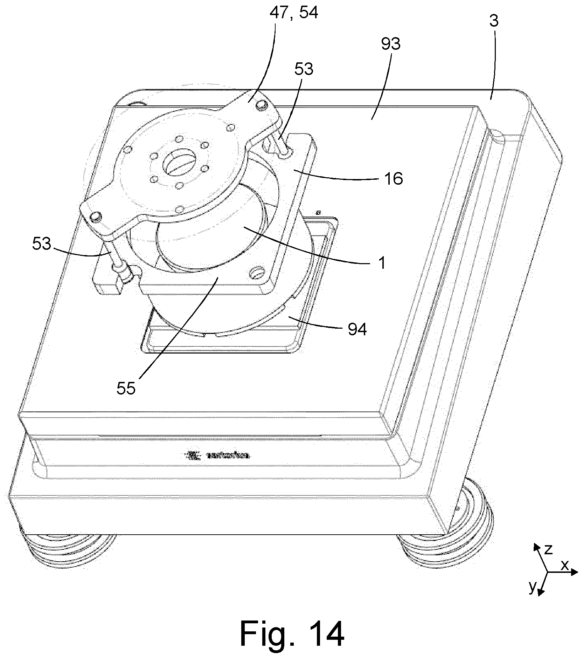

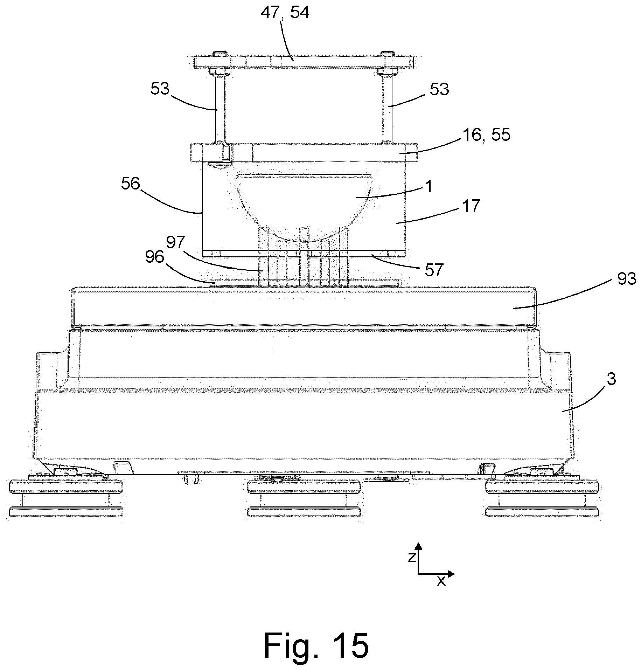

Der Greifer 47 ist insbesondere in den Figuren 14 und 15 zu sehen. Der Greifer 47 umfasst wenigstens ein Greifelement 53, das in Eingriff mit einem Prüfstück-Träger 16 gebracht werden kann. Exemplarisch umfasst der Greifer 47 zwei Greifelemente 53, die zweckmäßigerweise stiftförmig ausgeführt sind und/oder in z-Richtung nach unten abstehen. Vorzugsweise ist die Zuführeinheit 6 ausgebildet, mit dem Greifer 47 eine Greifbewegung durchzuführen, um die Greifelemente 53 in Eingriff mit dem Prüfstück-Träger 16 zu bringen. Die Greifbewegung umfasst insbesondere eine Drehung des Greifers 47 um die parallel zur z-Richtung verlaufende Drehachse. Exemplarisch umfasst der Greifer 47 eine Greiferplatte 54, von der aus sich die Greifelemente 53 nach unten erstrecken.

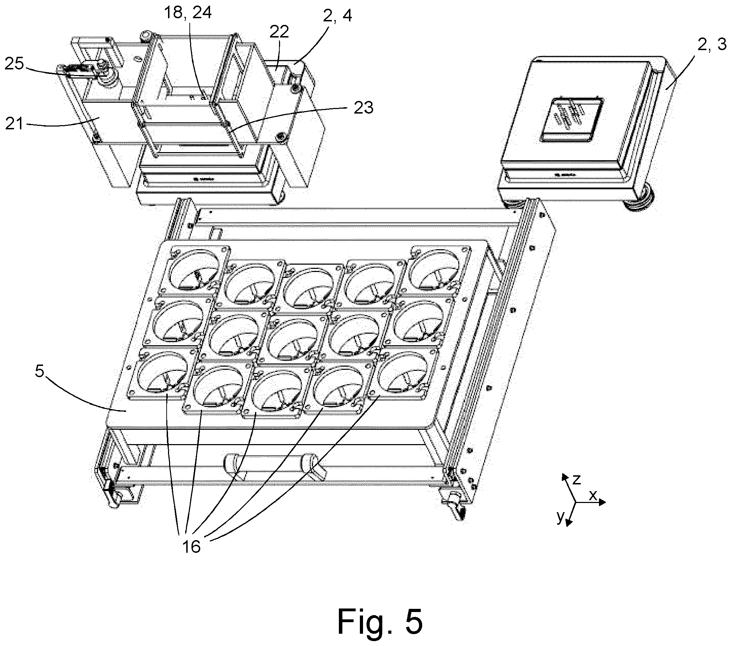

Die Figur 5 zeigt die Anordnung der Figur 4 ohne die Zuführeinheit 6. Das Prüfstück-Magazin 5, die Trockenwaage-Einrichtung 3 und die Nasswaage-Einrichtung 4 sind in derselben x-y-Ebene (insbesondere im Arbeitsraum 8) angeordnet und horizontal zueinander versetzt.

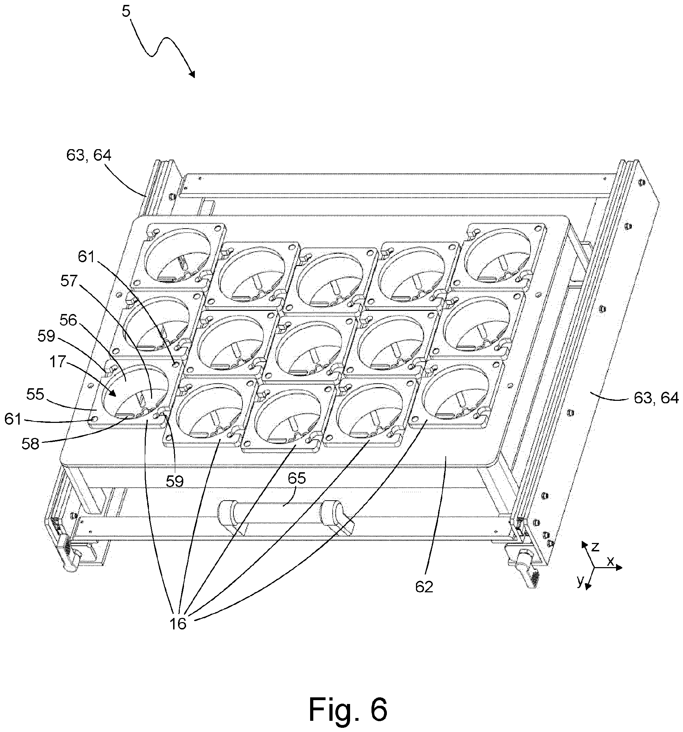

Die Figur 6 zeigt eine exemplarische Ausgestaltung des Prüfstück-Magazins 5 im Detail. Das Prüfstück-Magazin 5 umfasst eine Mehrzahl von Prüfstück-Plätzen, an denen jeweils ein Festkörper-Prüfstück aufgenommen werden kann. Die Prüfstück-Plätze sind exemplarisch in einer x-y-Ebene verteilt angeordnet. Exemplarisch wird jeder Prüfstück-Platz durch einen jeweiligen Prüfstück-Träger 16 bereitgestellt. Das Prüfstück-Magazin 5 umfasst zweckmäßigerweise eine Mehrzahl von Prüfstück-Trägern 16, die exemplarisch in einer x-y-Ebene verteilt angeordnet sind. Exemplarisch sind mindestens 5, insbesondere mindestens 10 oder mindestens 15 Prüfstück-Plätze und/oder Prüfstück-Träger 16 vorhanden. Der besseren Übersichtlichkeit halber sind in den Figuren jeweils nur die vorderen Prüfstück-Träger 16 mit dem Bezugszeichen "16" versehen.

Jeder Prüfstück-Träger 16 dient zur Aufnahme eines, insbesondere nur eines, Prüfstück-Festkörpers 1. Die Prüfstück-Träger 16 sind exemplarisch als Transportkörbe ausgebildet.

Gemäß einer bevorzugten Ausgestaltung sind im Prüfstück-Magazin 5 eine Mehrzahl von mittels additiver Fertigung hergestellter Festkörper-Prüfstücke 1 angeordnet. Die Festkörper-Prüfstücke 1 sind beispielsweise Werkstücke.

Die Festkörper-Prüfstücke 1 haben beispielsweise eine kubische, kugelförmige oder halbkugelförmige Grundgestalt. Die Festkörper-Prüfstücke 1 können ferner eine beliebige Grundgestalt haben.

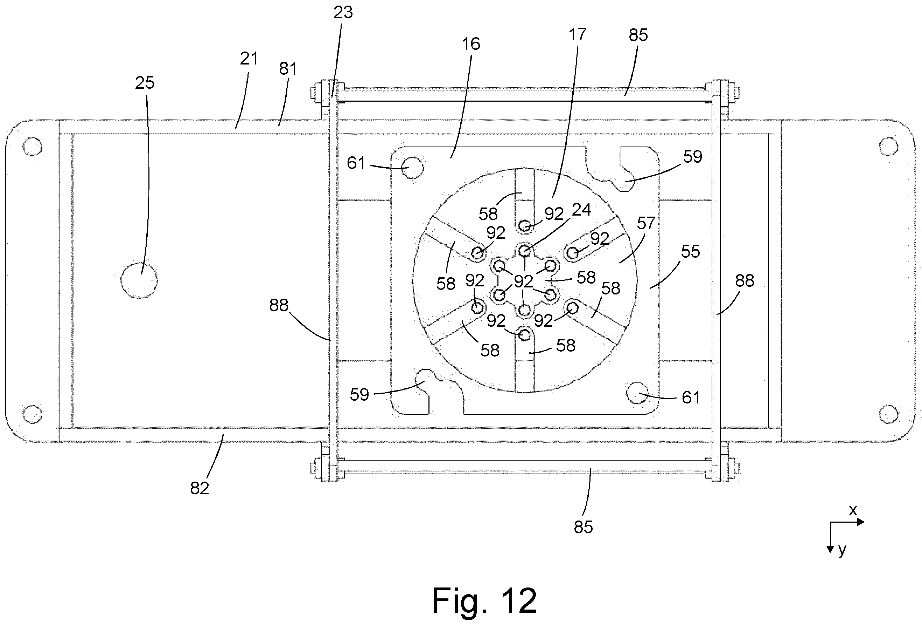

Zweckmäßigerweise umfasst jeder Prüfstück-Träger 16 einen Aufnahmebereich 17 zur Aufnahme eines Prüfstück-Festkörpers 1. Exemplarisch ist der Aufnahmebereich 17 als Aufnahmekammer, insbesondere als zylindrische Aufnahmekammer ausgeführt. Jeder Prüfstück-Träger 16 umfasst exemplarisch eine Trägerplatte 55, die mit ihrer Plattenebene insbesondere senkrecht zur z-Richtung ausgerichtet ist. In jeder Trägerplatte 55 ist eine exemplarisch kreisförmige Durchbrechung vorhanden, die den Aufnahmebereich 17, insbesondere die Aufnahmekammer, freigibt. Jeder Aufnahmebereich 17 ist seitlich zweckmäßigerweise durch einen Rohrabschnitt 56 begrenzt, der sich ausgehend von der Trägerplatte 55 nach unten erstreckt. Nach unten ist der Aufnahmebereich 17 durch einen Trägerboden 57 begrenzt, der exemplarisch kreisförmig ausgeführt ist. Im Trägerboden 57 sind eine oder mehrere Trägerboden-Durchbrechungen 58 vorhanden. Die Trägerboden-Durchbrechungen 58 sind insbesondere in der Figur 12 zu sehen. Exemplarisch umfassen die Trägerboden-Durchbrechungen 58 mehrere radial verlaufende schlitzförmige Durchbrechungen sowie eine zentral angeordnete Durchbrechung. Die schlitzförmigen Durchbrechungen sind exemplarisch unter gleichen Winkelabständen angeordnet und verlaufen zweckmäßigerweise jeweils bis zum äußeren Rand des Trägerbodens 57. Die Längsachsen der schlitzförmigen Durchbrechungen treffen sich zweckmäßigerweise im Mittelpunkt der zentral angeordneten Durchbrechung.

Jeder Prüfstück-Träger 16, insbesondere jede Trägerplatte 55, umfasst zweckmäßigerweise ferner wenigstens eine Eingriffsstruktur 59 und/oder wenigstens eine Fixierstruktur 61. Exemplarisch sind bei jedem Prüfstück-Träger 16 zwei Eingriffsstrukturen 59 vorhanden, die zweckmäßigerweise als seitliche Aussparungen in der Trägerplatte 55 ausgeführt sind. Die Eingriffsstrukturen 59 dienen dazu, mit den Greifelementen 53 in Eingriff gebracht zu werden. Exemplarisch sind ferner zwei Fixierstrukturen 61 vorhanden, die exemplarisch als Durchbrechungen in der Trägerplatte 55 ausgeführt sind. Die Fixierstrukturen 61 dienen dazu, mit insbesondere stiftförmigen Fixierelementen des Prüfstück-Magazins 5 in Eingriff gebracht zu werden, um so rotativ (um eine vertikale Drehachse) fixiert zu sein, so dass der Prüfstück-Träger 16 sich bei der Greifbewegung des Greifers 47, bei der die Greifelemente 53 in Eingriff mit den Eingriffsstrukturen 59 gebracht werden, sich nicht mit den Greifelementen 53 mitdreht.

Das Prüfstück-Magazin 5 umfasst exemplarisch einen Aufnahmeabschnitt 62 zur Aufnahme der Prüfstück-Träger 16. Der Aufnahmeabschnitt 62 ist insbesondere als Tablett ausgeführt. Die Oberseite des Aufnahmeabschnitts 62 stellt eine (senkrecht zur z-Richtung ausgerichtete) x-y-Aufnahmeebene dar, in der die Prüfstück-Träger 16 in x-Richtung und/oder y-Richtung zueinander versetzt angeordnet sind; sich also in x-Richtung und y-Richtung nicht überlappen. Zweckmäßigerweise sind an der Oberseite des Aufnahmeabschnitts 62 die stiftförmigen Fixierelemente angeordnet.

Zurück zur Figur 6: Das Prüfstück-Magazin 5 umfasst ferner einen Auszug 63, mit dem der Aufnahmeabschnitt 62 aus dem Arbeitsraum 8 ausgefahren werden kann, insbesondere durch die Bestückungsöffnung 44. Zweckmäßigerweise ermöglicht der Auszug 63 ein Verfahren des Aufnahmeabschnitts 62 in y-Richtung. Der Auszug 63 umfasst zweckmäßigerweise zwei parallel zueinander angeordnete Auszugsschienen 64, die insbesondere parallel zur y-Richtung ausgerichtet sind. Der Aufnahmeabschnitt 62 ist zweckmäßigerweise zwischen den beiden Auszugsschienen 64 angeordnet.

Das Prüfstück-Magazin 5 umfasst ferner einen Handgriff 65, mit dem der Aufnahmeabschnitt 62 durch einen Benutzer betätigbar ist, um den Aufnahmeabschnitt 62 mittels des Auszugs 63 zu verfahren. Der Handgriff 65 ist exemplarisch in y-Richtung vor dem Aufnahmeabschnitt 62 und zweckmäßigerweise in x-Richtung mittig zum Aufnahmeabschnitt 62 angeordnet.

Nachfolgend soll näher auf die Nasswaage-Einrichtung 4 eingegangen werden.

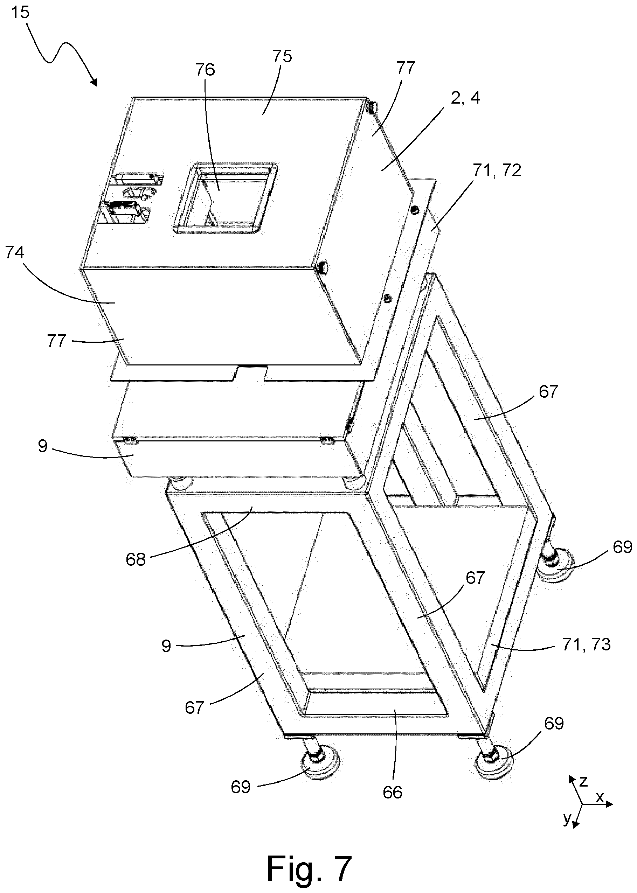

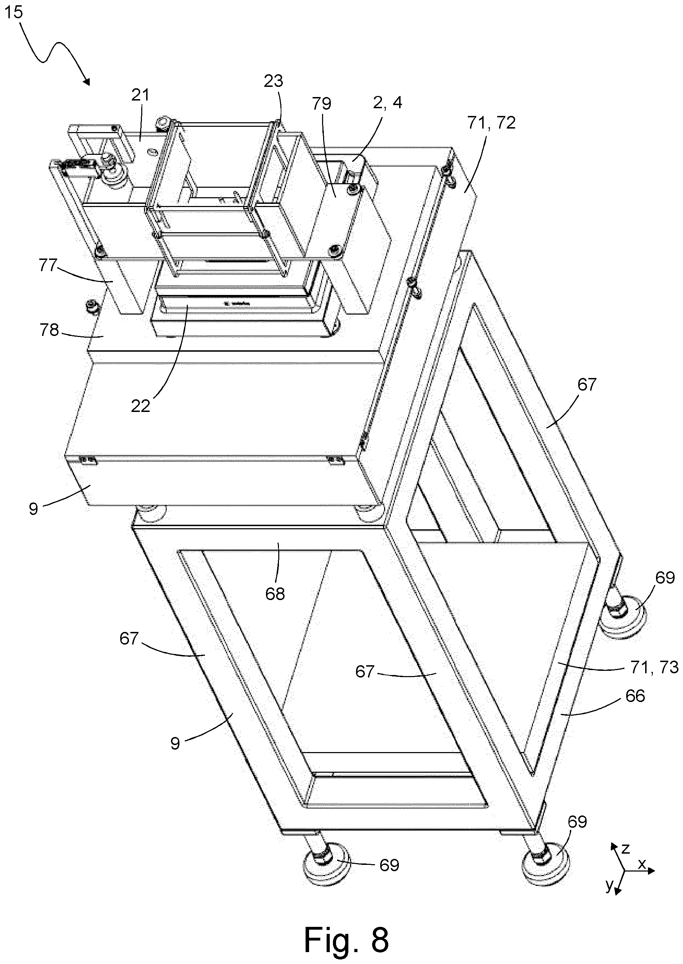

Zunächst zur Aufhängung der Nasswaage-Einrichtung 4. Exemplarisch umfasst der Messautomat 10 einen Nasswaage-Aufbau 15, der die Nasswaage-Einrichtung 4 sowie eine Schwingungsdämpfungs-Aufhängung 9 umfasst. Der Nasswaage-Aufbau 15 ist insbesondere in den Figuren 7 und 8 gezeigt. Exemplarisch steht die Nasswaage-Einrichtung 4 auf der Schwingungsdämpfungs-Aufhängung 9. Die Schwingungsdämpfungs-Aufhängung 9 steht zweckmäßigerweise auf demselben Boden, wie die Rahmenstruktur 11 und/oder der Messautomat 10. Die Schwingungsdämpfung-Aufhängung 9 ist exemplarisch als Gestell ausgeführt. Die Schwingungsdämpfung-Aufhängung 9 umfasst exemplarisch einen Gestell-Boden 66, von dem aus sich mehrere Vertikal-Gestellabschnitte 67 vertikal nach oben erstrecken. Die Vertikal-Gestellabschnitte 67 tragen eine Gestell-Plattform 68. Die Schwingungsdämpfungs-Aufhängung 9 umfasst ferner mehrere Gestell-Füße 69, mit denen die Schwingungsdämpfungs-Aufhängung 9 auf dem Boden steht. Die Schwingungsdämpfungs-Aufhängung 9 ist exemplarisch (zumindest teilweise) in dem Versorgungsraum 45 angeordnet.

Die Schwingungsdämpfungs-Aufhängung 9 umfasst zweckmäßigerweise wenigstens eine Schwingungsdämpfungsmasse 71. Exemplarisch umfasst die Schwingungsdämpfungs-Aufhängung 9 eine obere Schwingungsdämpfungsmasse 72 und/oder eine untere Schwingungsdämpfungsmasse 73. Die Schwingungsdämpfungsmassen 71 sind zweckmäßigerweise jeweils als Gewichtsplatte, vorzugsweise als Steinplatte, insbesondere Granitplatte, und/oder als Stahlplatte ausgeführt. Die Schwingungsdämpfungsmassen 71 haben zweckmäßigerweise eine Dichte von wenigstens 2 g/cm^3, vorzugsweise von wenigstens 7 g/cm^3. Die obere Schwingungsdämpfungsmasse 72 ist zweckmäßigerweise zwischen der Gestell-Plattform 68 und der Nasswaage-Einrichtung 4 angeordnet. Exemplarisch steht die Nasswaage-Einrichtung 4 auf der oberen Schwingungsdämpfungsmasse 72 und die obere Schwingungsdämpfungsmasse 72 liegt auf der Gestell-Plattform 68 auf. Die untere Schwingungsdämpfungsmasse 73 ist exemplarisch auf dem Gestell-Boden 66 angeordnet.

Die Schwingungsdämpfungs-Aufhängung 9 ist ausgebildet, aus der Umgebung des Messautomaten 10 stammende mechanische Schwingungen zu dämpfen, um deren Einfluss auf die Wäge-Messwerte zu verringern. Die Dämpfung der Schwingungen wird insbesondere mittels der wenigstens einen Schwingungsdämpfungsmasse 71 erzielt. Zweckmäßigerweise verhindert die Schwingungsdämpfungs-Aufhängung 9, dass Schwingungen des Bodens, auf dem die Rahmenstruktur 11 und die Schwingungsdämpfungs-Aufhängung 9 steht, an die Nasswaage-Einrichtung 4 übertragen werden. Die Schwingungsdämpfungs-Aufhängung 9 ist insbesondere ausgebildet, Schwingungsfrequenzen von über 2 Hz zu dämpfen, insbesondere derart, dass diese die Messung mit der Nasswaageeinrichtung 4 nicht beeinflussen.

Die Nasswaage-Einrichtung 4 ist insbesondere anders aufgehängt als die Trockenwaage-Einrichtung 3, die Zuführeinheit 6 und/oder das Prüfstück-Magazin 5. Während das Prüfstück-Magazin 5, die Zuführeinheit 6 und zweckmäßigerweise die Trockenwaage-Einrichtung 3 exemplarisch gegenüber dem Boden, auf dem der Messautomat 10 steht, mit der Rahmenstruktur 11 abgestützt sind, wird die Nasswaage-Einrichtung 4 über die Schwingungsdämpfungs-Aufhängung (und insbesondere nicht über die Rahmenstruktur 11) gegenüber dem Boden abgestützt. Die Nasswaage-Einrichtung 4 und insbesondere die Schwingungsdämpfungs-Aufhängung 9 sind zweckmäßigerweise von der Rahmenstruktur 11 schwingungsentkoppelt.

Exemplarisch umfasst der Arbeitsraum-Boden 12, auf dem das Prüfstück-Magazin 5 steht, eine Nasswaage-Aussparung 14, insbesondere eine Durchbrechung. Der Nasswaage-Aufbau 15 erstreckt sich durch die Nasswaage-Aussparung 14. Zweckmäßigerweise erstreckt sich der Nasswaage-Aufbau 15 durch die Nasswaage-Aussparung 14 von dem Versorgungsraum 45 in den Arbeitsraum 8.

Die Nasswaage-Einrichtung 4 umfasst zweckmäßigerweise ein Becken 21, in dem eine Flüssigkeit 19, insbesondere Wasser, vorhanden ist. Ferner kann es sich bei der Flüssigkeit 19 auch um Ethanol oder eine andere Flüssigkeit handeln. Zweckmäßigerweise ist die Dichte der Flüssigkeit 19 geringer als die Dichte der Festkörper-Prüfstücke 1. Bei dem Wiegen des Festkörper-Prüfstücks 1 mit der Nasswaage-Einrichtung 4 wird das Festkörper-Prüfstück 1 zweckmäßigerweise in die Flüssigkeit 19 im Becken 21 eingetaucht, insbesondere vollständig. Exemplarisch ist der Flüssigkeit 19, insbesondere dem Wasser, ein Tensid beigemischt. Durch das Tensid kann eine Blasenbildung in der Flüssigkeit 19 verringert, insbesondere verhindert, werden, wodurch die Genauigkeit der Messung erhöht werden kann. Das Tensid ist zweckmäßigerweise silikonfrei. Vorzugsweise ist das Tensid eine Mischung aus einem Netzmittel und einem Entschäumer.

Beispielsweise umfasst die Flüssigkeit 19, insbesondere das Wasser, ein Netzmittel, insbesondere ein silikonfreies Substratnetzmittel, zweckmäßigerweise in einer Konzentration von 0,2 % Volumenprozent. Das Substratnetzmittel umfasst zweckmäßigerweise Alkoholalkoxylate oder besteht daraus. Das Netzmittel ist beispielsweise BYK-DYNWET 800 N von BYK.

Zweckmäßigerweise ist der Messautomat 10 ausgebildet, die Flüssigkeit 19 automatisiert zu wechseln, beispielsweise Zeit- und/oder Messanzahl-gesteuert.

Die Nasswaage-Einrichtung 4 umfasst optional ferner eine Abdeckung 74 zur Abdeckung des Beckens 21. In der Figur 7 ist die Nasswaage-Einrichtung 4 mit der Abdeckung 74 gezeigt und in der Figur 8 ohne die Abdeckung 74. Die Abdeckung 74 ist vorzugsweise eine Abdeckungshaube. Exemplarisch hat die Abdeckung eine quaderförmige Grundgestalt mit insbesondere offener Unterseite. Die Abdeckung 74 umfasst eine Abdeckungs-Oberseite 75, in der sich zweckmäßigerweise eine Träger-Öffnung 76 befindet, durch die ein Prüfstück-Träger 16 in das Becken 21 abgesenkt werden kann. Die Träger-Öffnung 76 nimmt zweckmäßigerweise weniger als ein Drittel der Fläche der Abdeckungs-Oberseite 75 ein. Die Abdeckung 74 umfasst exemplarisch geschlossene Abdeckungs-Umfangswände 77. Die Abdeckung 74 ist zweckmäßigerweise über das Becken 21 gestülpt. Vorzugsweise ist die Abdeckung 74 über das Becken 21, eine Kraftübertragungsstruktur 23 und eine erste Waageeinheit 22 gestülpt.

Die Abdeckung 74 dient als zusätzliche Umhausung der Nasswaage-Einrichtung 4 (zusätzlich zu den Umfangswänden des Messautomat-Gehäuses 7) und verhindert zweckmäßigerweise, das Luftbewegungen die Flüssigkeit 19 im Becken 21 in Bewegung versetzen und dadurch die Messung stören.

Die Nasswaage-Einrichtung 4 umfasst die erste Waageeinheit 22, die exemplarisch als Labor-Präzisionswaage ausgeführt ist. Die Nasswaage-Einrichtung 4 umfasst exemplarisch ferner eine Becken-Tragestruktur 77, die das Becken 21 trägt. Die erste Waageeinheit 22 und die Becken-Tragestruktur 77 stehen zweckmäßigerweise auf derselben Unterlage, exemplarisch auf einem insbesondere plattenförmigen Nasswaage-Boden 78. Der Nasswaage-Boden 78 steht exemplarisch auf der oberen Schwingungsdämpfungsmasse 72. Die erste Waageeinheit 22 umfasst einen ersten Kraftaufnahmeabschnitt und ist ausgebildet, die auf den ersten Kraftaufnahmeabschnitt ausgeübte Kraft zu erfassen und auf Basis der erfassten Kraft einen Wäge-Messwert, insbesondere den Nasswäge-Messwert, bereitzustellen. Der Kraftaufnahmeabschnitt ist insbesondere auf der Oberseite der ersten Waageeinheit 22 angeordnet. Die Kraftübertragungsstruktur 23 verläuft exemplarisch von dem Inneren des Beckens 21 zu dem Kraftaufnahmeabschnitt. Die Becken-Tragestruktur 77 verläuft exemplarisch über die Oberseite der ersten Waageeinheit 22, insbesondere über den Kraftaufnahmeabschnitt. Die Becken-Tragestruktur 77 umfasst zweckmäßigerweise eine Becken-Trageplatte 79, auf der das Becken 21 steht und die über die erste Waageeinheit 21, insbesondere über den Kraftaufnahmeabschnitt, verläuft.

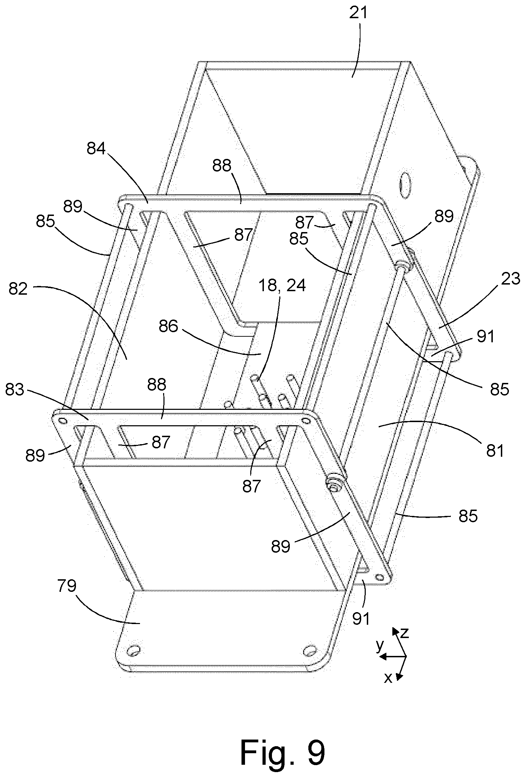

Die Figur 9 zeigt eine exemplarische Ausgestaltung des Beckens 21 und der Kraftübertragungsstruktur 23 im Detail. Das Becken 21 ist exemplarisch quaderförmig ausgeführt und verfügt zweckmäßigerweise über eine offene Oberseite. Die Kraftübertragungsstruktur 23 kann auch als Skelett bezeichnet werden. Die Kraftübertragungsstruktur 23 führt exemplarisch aus dem Inneren des Beckens 21, insbesondere aus der Flüssigkeit 19, aus der offenen Oberseite des Beckens 21 heraus und führt dann nach unten, zweckmäßigerweise bis unterhalb des Beckens 21, insbesondere bis unterhalb der Becken-Trageplatte 79. Die Kraftübertragungsstruktur 23 umfasst insbesondere eine erste geschlossene Kontur 83, die von dem Inneren des Beckens 21, insbesondere aus der Flüssigkeit 19, aus der offenen Oberseite des Beckens 21 heraus verläuft, dann entlang einer ersten Becken-Umfangswand 81 nach unten bis unterhalb des Beckens 21, insbesondere unterhalb der Becken-Trägerplatte 79, dann unter dem Becken 21, insbesondere unter der Becken-Trägerplatte 79 hindurchläuft und entlang einer parallel zur ersten Becken-Umfangswand 81 angeordneten zweiten Becken-Umfangswand 82 nach oben und durch die offene Oberseite des Beckens 21 in das Becken 21, insbesondere die Flüssigkeit 19, verläuft. Die Kraftübertragungsstruktur 23 umfasst zweckmäßigerweise ferner eine zweite geschlossene Kontur 84, die zweckmäßigerweise entsprechend zu der ersten geschlossenen Kontur 83 ausgestaltet ist und die zweckmäßigerweise horizontal versetzt, insbesondere in y-Richtung versetzt, zur ersten geschlossenen Kontur 83 angeordnet ist. Die erste geschlossene Kontur 83 und die zweite geschlossene Kontur 84 sind exemplarisch über insbesondere stangenförmige Verbindungselemente 85, die insbesondere parallel zur x-Richtung verlaufen, miteinander verbunden.

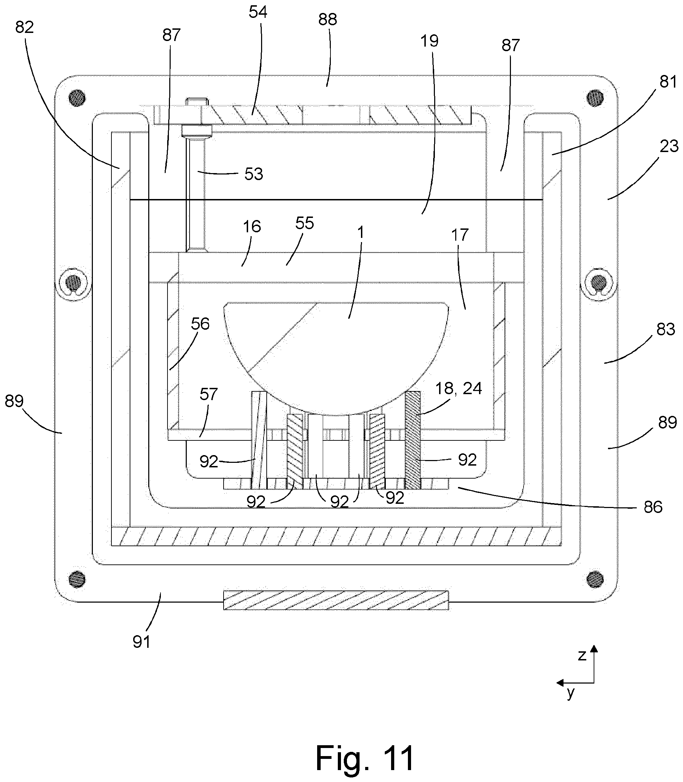

Die Kraftübertragungsstruktur 23 ist insbesondere in der Figur 11 zu sehen. Die Kraftübertragungsstruktur 23, insbesondere die erste geschlossene Kontur 83, umfasst exemplarisch einen Strukturboden 86, der sich insbesondere im Becken 21 in der Flüssigkeit 19 befindet. Vom Strukturboden 86 erstreckt sich exemplarisch eine erste Prüfstück-Hebestruktur 24 nach oben, die sich ebenfalls in der Flüssigkeit 19 im Becken 21 befindet. Ferner erstrecken sich von dem Strukturboden 86 innere Vertikalabschnitte 87 vertikal nach oben, und zwar wenigstens ein innerer Vertikalabschnitt 87 entlang der Innenseite der ersten Becken-Umfangswand 81 und wenigstens ein innerer Vertikalabschnitt 87 entlang der Innenseite der zweiten Becken-Umfangswand 82. Exemplarisch sind jeweils zwei innere Vertikalabschnitte 87 über einen oberen Horizontalabschnitt 88 miteinander verbunden, der zweckmäßigerweise oberhalb des Beckens 21 verläuft. Die inneren Vertikalabschnitte 87 ragen aus dem Becken 21 heraus und gehen über in äußere Vertikalabschnitte 89, die außerhalb des Beckens 21 vertikal nach unten verlaufen. Wenigstens ein äußerer Vertikalabschnitt 89 verläuft entlang der Außenseite der ersten Becken-Umfangswand 81 nach unten und wenigstens ein äußerer Vertikalabschnitt 89 verläuft entlang der Außenseite der zweiten Becken-Umfangswand 82 nach unten. Jeweils zwei äußere Vertikalabschnitte 89 sind über einen unteren Horizontalabschnitt 91 verbunden, der unterhalb des Beckens 21, insbesondere unterhalb der Becken-Trageplatte 79, verläuft. Der untere Horizontalabschnitt 91 ist zweckmäßigerweise mit dem Kraftaufnahmeabschnitt der ersten Waageeinheit 22 gekoppelt, insbesondere verbunden.

Die Kraftübertragungsstruktur 23 wiegt zweckmäßigerweise weniger als 120 g. Zweckmäßigerweise berührt die Kraftübertragungsstruktur 23 das Becken 21 nicht. Die Kraftübertragungsstruktur 23 befindet sich zum Teil in der Flüssigkeit 19, z.B. mit dem Strukturboden 86 und der ersten Prüfstück-Hebestruktur 24.

Die erste Prüfstück-Hebestruktur 24 ist exemplarisch als Stiftbett ausgeführt. Die erste Prüfstück-Hebestruktur 24 umfasst zweckmäßigerweise eine Mehrzahl an ersten Stiften 92, die sich zweckmäßigerweise von dem Strukturboden 86 vertikal nach oben erstrecken.

Der Messautomat 10 ist zweckmäßigerweise ausgebildet, das Wiegen jedes Festkörper-Prüfstücks 1 unter Verwendung der Nasswaage-Einrichtung 4 in einem Zustand durchzuführen, in dem sich das Festkörper-Prüfstück 1 innerhalb des Aufnahmebereichs 17 des jeweiligen Prüfstück-Trägers 16 befindet. Die erste Prüfstück-Hebestruktur 24 dient dazu, beim Wiegen eines Festkörper-Prüfstücks 1 in den jeweiligen Prüfstück-Träger 16 zu greifen und das Festkörper-Prüfstück 1 gegenüber dem Prüfstück-Träger 16 anzuheben.

Die Figur 11 zeigt einen Zustand, in dem der Prüfstück-Träger 16 mit einem Festkörper-Prüfstück 1 von der Zuführeinheit 6 in die Flüssigkeit 19 im Becken 21 abgesenkt wurde. Der Prüfstück-Träger 16 und das Festkörper-Prüfstück 1 befinden sich exemplarisch vollständig in der Flüssigkeit 19. Vorzugsweise ist der Messautomat 10 ausgebildet, in diesem Zustand das Wiegen mit der Nasswaage-Einrichtung 4 durchzuführen, um den Nasswäge-Messwert zu erhalten. Die erste Prüfstück-Hebestruktur 24, insbesondere die Stifte 92, greifen durch die Trägerboden-Durchbrechungen 58 in den Aufnahmebereich 17 und stützen das Festkörper-Prüfstück 1 ab, so dass das Festkörper-Prüfstück 1 gegenüber dem Prüfstück-Träger 16, insbesondere dem Trägerboden 57, angehoben wird und insbesondere nicht mehr vom Prüfstück-Träger 16 abgestützt wird.

Zweckmäßigerweise dringen die Stifte 92 beim Absenken des Prüfstück-Träger 16 in das Becken 21 durch die Trägerboden-Durchbrechungen 58 in den Aufnahmebereich 17 so dass das Festkörper-Prüfstück auf den Stiften 92 aufliegt und nicht weiter (mit dem Prüfstück-Träger 16) abgesenkt wird.

Gemäß einer bevorzugten Ausgestaltung umfasst der Messautomat 10 eine Flüssigkeitspegel-Regeleinrichtung 25 zur Regelung des Flüssigkeitspegels des Beckens 21. Die Flüssigkeitspegel-Regeleinrichtung 25 umfasst zweckmäßigerweise den Flüssigkeitsbehälter 46. Vorzugsweise umfasst die Flüssigkeitspegel-Regeleinrichtung 25 ferner eine Flüssigkeitszuführeinrichtung, eine Flüssigkeitspegel-Sensoreinrichtung und/oder einen Beckenabfluss. Die Flüssigkeitszuführeinrichtung umfasst vorzugsweise eine Pumpe, insbesondere eine Mikrozahnringpumpe, um dem Becken 21 die Flüssigkeit 19 zuzuführen, insbesondere aus dem Flüssigkeitsbehälter 46. Die Flüssigkeitspegel-Regeleinrichtung 25 ist ausgebildet, mit der Flüssigkeitspegel-Sensoreinrichtung den Ist-Flüssigkeitspegel im Becken 21 zu erfassen und auf Basis des Ist-Flüssigkeitspegels und eines Soll-Flüssigkeitspegels eine Regelung des Flüssigkeitspegels durchzuführen, insbesondere unter Verwendung der Flüssigkeitszuführeinrichtung, insbesondere der Mikrozahnringpumpe. Zweckmäßigerweise ist die Flüssigkeitspegel-Regeleinrichtung 25 ausgebildet, die Regelung des Flüssigkeitspegels blasenfrei durchzuführen, insbesondere mittels der Mikrozahnringpumpe.

Zweckmäßigerweise ist der Messautomat 10 ausgebildet, zum Wiegen des Festkörper-Prüfstücks 1 mit der Nasswaage-Einrichtung 4 das Festkörper-Prüfstück 1 zusammen mit einem/dem jeweiligen Prüfstück-Träger 16 in die Flüssigkeit 19 des Beckens 21 einzutauchen und nach dem Eintauchen des Prüfstück-Trägers 16 die Regelung des Flüssigkeitspegels durchzuführen, insbesondere mittels der Flüssigkeitspegel-Regeleinrichtung 25. Der Messautomat 10 ist insbesondere ausgebildet, die Regelung des Flüssigkeitspegels durchzuführen, bevor der Nasswäge-Messwert erfasst wird.

Zweckmäßigerweise ist der Messautomat 10 ausgebildet, durch diese Regelung des Flüssigkeitspegels zu kompensieren, dass der Prüfstück-Träger 16 und/oder der Greifer 47 beim Eintauchen in die Flüssigkeit 19 im Becken 21 den Flüssigkeitspegel ändern und dadurch den Nasswäge-Messwert beeinflussen.

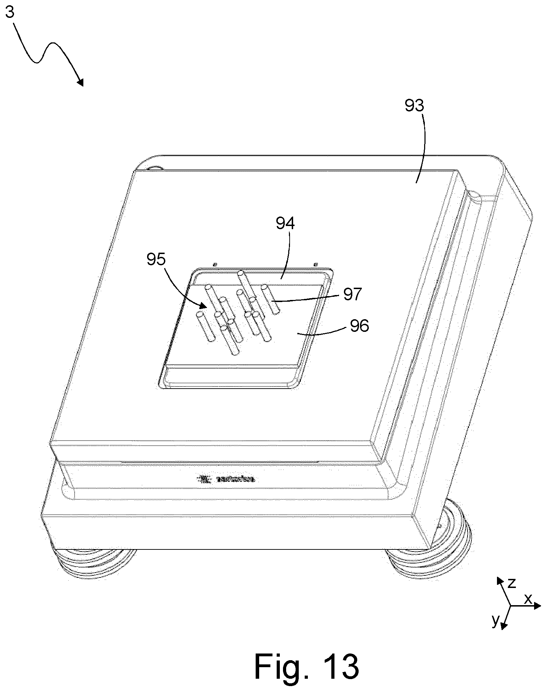

Unter Bezugnahme auf die Figuren 13 bis 15 soll nachstehend näher auf die Trockenwaage-Einrichtung 3 eingegangen werden. Die Trockenwaage-Einrichtung 3 umfasst eine zweite Waageeinheit 93, die exemplarisch als Labor-Präzisionswaage ausgeführt ist. Die zweite Waageeinheit 93 umfasst einen zweiten Kraftaufnahmeabschnitt 94 und ist ausgebildet, die auf den zweiten Kraftaufnahmeabschnitt 94 ausgeübte Kraft zu erfassen und auf Basis der erfassten Kraft einen Wäge-Messwert, insbesondere einen Trockenwäge-Messwert, bereitzustellen. Der zweite Kraftaufnahmeabschnitt 94 ist insbesondere auf der Oberseite der zweite Waageeinheit 93 angeordnet. Auf dem zweiten Kraftaufnahmeabschnitt 94 ist exemplarisch eine zweite Prüfstück-Hebestruktur 95 angeordnet. Die zweite Prüfstück-Hebestruktur 95 ist exemplarisch als Stiftbett ausgeführt. Die zweite Prüfstück-Hebestruktur 95 umfasst zweckmäßigerweise einen zweiten Strukturboden 96, der insbesondere plattenförmig ausgeführt ist, und eine Mehrzahl an zweiten Stiften 97, die sich zweckmäßigerweise von dem zweiten Strukturboden 96 vertikal nach oben erstrecken.

Der Messautomat 10 ist zweckmäßigerweise ausgebildet, das Wiegen jedes Festkörper-Prüfstücks 1 unter Verwendung der Trockenwaage-Einrichtung 3 in einem Zustand durchzuführen, in dem sich das Festkörper-Prüfstück 1 innerhalb des Aufnahmebereichs 17 des jeweiligen Prüfstück-Trägers 16 befindet. Die zweite Prüfstück-Hebestruktur 95 ist ausgebildet, beim Wiegen eines Festkörper-Prüfstücks 1 in den jeweiligen Prüfstück-Träger 16 zu greifen und das Festkörper-Prüfstück 1 gegenüber dem Prüfstück-Träger 16 anzuheben.

Die Figur 15 zeigt einen Zustand, in dem der Prüfstück-Träger 16 mit einem Festkörper-Prüfstück 1 von der Zuführeinheit 6 auf die zweite Prüfstück-Hebestruktur 95 abgesenkt wurde. Vorzugsweise ist der Messautomat 10 ausgebildet, in diesem Zustand das Wiegen mit der Trockenwaage-Einrichtung 3 durchzuführen, um den Trockenwäge-Messwert zu erhalten. Die zweite Prüfstück-Hebestruktur 95, insbesondere die Stifte 97, greifen durch die Trägerboden-Durchbrechungen 58 in den Aufnahmebereich 17 und stützen das Festkörper-Prüfstück 1 ab, so dass das Festkörper-Prüfstück 1 gegenüber dem Prüfstück-Träger 16, insbesondere dem Trägerboden 57, angehoben wird und insbesondere nicht mehr vom Prüfstück-Träger 16 abgestützt wird. Zweckmäßigerweise dringen die Stifte 92 beim Absenken des Prüfstück-Träger 16 durch die Trägerboden-Durchbrechungen 58 in den Aufnahmebereich 17 so dass das Festkörper-Prüfstück 1 auf den Stiften 92 aufliegt und nicht weiter (mit dem Prüfstück-Träger 16) abgesenkt wird.

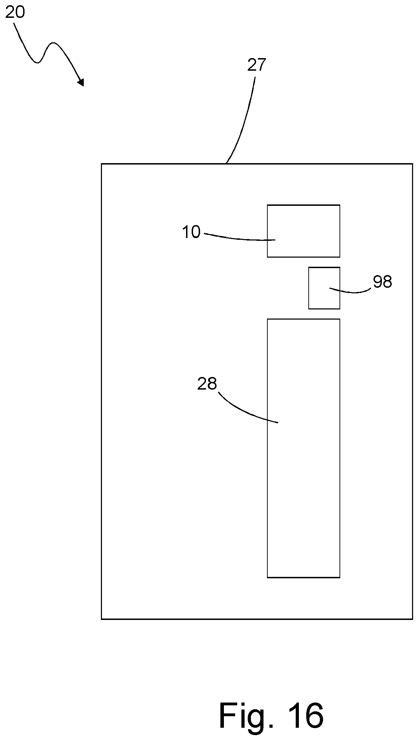

Die Figur 16 zeigt eine Fertigungsanlage 20, die eine Fertigungshalle 27, beispielsweise eine Gebäudehalle, umfasst. Die Fertigungsanlage 20 ist insbesondere eine industrielle Fertigungsanlage. Die Fertigungsanlage 20 umfasst einen Messautomaten 10, der zweckmäßigerweise wie hier beschrieben ausgeführt ist. Die Fertigungsanlage 20 umfasst ferner eine Fertigungsvorrichtung 28 zur Fertigung von Festkörper-Prüfstücken 1, beispielsweise von Werkstücken. Die Fertigungsvorrichtung 28 ist beispielsweise ausgebildet, die Festkörper-Prüfstücke 1 per additiver Fertigung herzustellen. Beispielsweise umfasst die Fertigungsvorrichtung 28 einen 3D-Drucker zur Fertigung der Festkörper-Prüfstücke 1.

Die Fertigungsvorrichtung 28 und der Messautomat 10 stehen zweckmäßigerweise auf demselben Boden, insbesondere dem Boden der Fertigungshalle 27.

Die Fertigungsanlage 20 umfasst vorzugsweise ferner eine Ladeeinheit 98 zum Laden der mit der Fertigungsvorrichtung 28 hergestellten Festkörper-Prüfstücke 1 in den Messautomaten 10. Die Ladeeinheit ist beispielsweise eine Robotereinheit.

Der Messautomat 10 ist zweckmäßigerweise ausgebildet, für jedes Festkörper-Prüfstück 1 Wäge-Messwerte, insbesondere einen Nasswäge-Messwert und einen Trockenwäge-Messwert, zu erfassen. Der Messautomat 10 ist zweckmäßigerweise ferner ausgebildet, auf Basis der Wäge-Messwerte eine Fertigungsqualität der Festkörper-Prüfstücke 1 zu beurteilen und eine entsprechende Beurteilungsinformation bereitzustellen.

Gemäß einer möglichen Ausführungsform ist die Fertigungsvorrichtung 28 ausgebildet, die Herstellung der Festkörper-Prüfstücke auf Basis der Beurteilungsinformation anzupassen. Beispielsweise besteht eine Kommunikationsverbindung zwischen dem Messautomaten 10 und der Fertigungsvorrichtung 28, über die die Beurteilungsinformation übertragen wird.

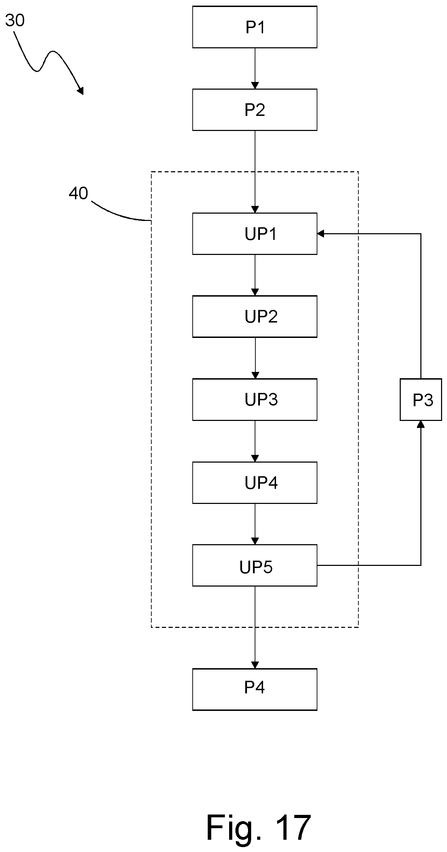

Unter Bezugnahme auf die Figur 17 soll nachstehend auf einen Betrieb des Messautomaten 10 eingegangen werden. Die Figur 17 zeigt ein Flussdiagramm eines Verfahrens 30, gemäß dem der Messautomat betrieben werden kann. Das Verfahren 30 kann auch als Messprozedur bezeichnet werden.

Zweckmäßigerweise umfasst der Messautomat 10 eine Steuereinheit, insbesondere eine Rechnereinheit, beispielsweise einen Microcontroller, die den Betrieb und insbesondere die nachfolgend erläuterten Schritte steuert. Insbesondere ist die Steuereinheit ausgebildet, den automatisierten Betrieb des Messautomaten 10 zu steuern. Zweckmäßigerweise ist die Steuereinheit ausgebildet, die Zuführeinheit 6 anzusteuern, um das Zuführen der Festkörper-Prüfstücke 1 zu bewirken. Ferner ist die Steuereinheit zweckmäßigerweise ausgebildet, die Flüssigkeitspegel-Regeleinrichtung 25 anzusteuern, um eine Regelung des Flüssigkeitspegels zu erzielen. Ferner ist die Steuereinheit ausgebildet, mit Trockenwaage-Einrichtung 3 und der Nasswaage-Einrichtung 4 zu kommunizieren, um zweckmäßigerweise den Trockenwäge-Messwert und den Nasswäge-Messwert auszulesen. Zweckmäßigerweise ist die Steuereinheit ferner ausgebildet, auf Basis des Trockenwäge-Messwerts und des Nasswäge-Messwerts den Dichtewert zu berechnen.

Das Verfahren beginnt mit dem Schritt P1, bei dem mehrere Festkörper-Prüfstücke 1 in den Messautomaten 10, insbesondere in das Prüfstück-Magazin 5, geladen werden. Beispielsweise wird der Aufnahmeabschnitt 62 manuell mittels des Handgriffs 65 durch die Bestückungsöffnung 44 aus dem Arbeitsraum 8 gezogen und die Festkörper-Prüfstücke 1 werden in die Prüfstück-Plätze, insbesondere die Prüfstück-Träger 16 geladen.

Gemäß einer möglichen Ausgestaltung erfolgt das Laden automatisiert. Ferner ist es möglich, dass das Laden dadurch erfolgt, dass ein bereits mit Festkörper-Prüfstücken 1 geladener Aufnahmeabschnitt 62 in den Messautomaten 10 befördert wird, insbesondere automatisiert.

Das Verfahren fährt mit dem optionalen Schritt P2 fort, bei dem dem Messautomaten 10 eine Auswahlinformation bereitgestellt wird, die eine oder mehrere Prüfstück-Plätze des Prüfstück-Magazins 5 anzeigt. Der Messautomat 10 ist ausgebildet, die Bestimmung der Dichte für diejenigen Festkörper-Prüfstücke 1 durchzuführen, die sich an den durch die Auswahlinformation bestimmten Prüfstück-Plätzen befinden.

Beispielsweise wird die Auswahlinformation mittels einer Benutzereingabe, insbesondere über die Schnittstelle 26, eingegeben. Beispielsweise zeigt die Schnittstelle 26 eine Darstellung der Prüfstück-Plätze an (beispielsweise ein Schachbrett-Muster) und der Benutzer kann durch Berühren der dargestellten Prüfstück-Plätze diejenigen Prüfstück-Plätze auswählen, für die eine Dichtebestimmung erfolgen soll.

Gemäß einer möglichen Ausgestaltung ist der Messautomat 10 ausgebildet, automatisiert zu erfassen, an welchen Prüfstück-Plätzen ein Festkörper-Prüfstück angeordnet ist, beispielsweise mittels einer optischen Sensorik.

Der Schritt P2 kann zweckmäßigerweise auch vor dem Schritt P1 oder parallel zu dem Schritt P1 erfolgen.

Das Verfahren 30 fährt fort mit einer Mess-Unterprozedur 40. Zweckmäßigerweise ist der Messautomat 10 ausgebildet, für jedes Festkörper-Prüfstück (für das eine Dichtebestimmung erfolgen soll) eine eigene Mess-Unterprozedur 40 durchzuführen.

Die Mess-Unterprozedur 40 umfasst den Schritt UP1, bei dem die Zuführeinheit 6 einen ersten Prüfstück-Träger 16 aufnimmt. Zweckmäßigerweise ist der Messautomat 10 ausgebildet, mittels der Zuführeinheit 6 automatisiert den ersten Prüfstück-Träger 16 aufzunehmen, beispielsweise indem der Greifer 47 automatisiert zu dem ersten Prüfstück-Träger 16 gefahren wird, in Eingriff mit dem ersten Prüfstück-Träger 16 gebracht wird, beispielsweise durch Durchführen der Greifbewegung, und der Prüfstück-Träger 16 dann aus dem Prüfstück-Magazin 5, insbesondere aus dem Aufnahmeabschnitt 62, herausgehoben wird.

Die Mess-Unterprozedur 40 umfasst ferner den Schritt UP2, bei dem das in dem ersten Prüfstück-Träger 16 befindliche erste Festkörper-Prüfstück 1 mit der Trockenwaage-Einrichtung 3 gewogen wird. Zweckmäßigerweise ist der Messautomat 10 ausgebildet, das erste Festkörper-Prüfstück 1 in dem ersten Prüfstück-Träger 16 mittels der Zuführeinheit 6 zu der Trockenwaage-Einrichtung 3 zu verfahren, zweckmäßigerweise durch ein Bewegen des Greifers 47 in einer x-Richtung und/oder einer y-Richtung. Zweckmäßigerweise ist der Messautomat 10 ferner ausgebildet, mittels der Zuführeinheit 6 den ersten Prüfstück-Träger 16 auf die Trockenwaage-Einrichtung 3 abzusenken. Zweckmäßigerweise greift beim Absenken des Prüfstück-Trägers 16 die zweite Prüfstück-Hebestruktur 95 in den Aufnahmebereich 17 des ersten Prüfstück-Trägers 16 und hebt das erste Festkörper-Prüfstück 1 gegenüber dem ersten Prüfstück-Träger 16 an. Die von dem ersten Festkörper-Prüfstück 1 auf die zweite Prüfstück-Hebestruktur 95 ausgeübte Kraft wird auf den zweiten Kraftaufnahmeabschnitt 94 übertragen und von der zweiten Waageeinheit 93 als Trockenwäge-Messwert erfasst.

Die Mess-Unterprozedur 40 umfasst ferner den Schritt UP3, bei dem das in dem ersten Prüfstück-Träger 16 befindliche erste Festkörper-Prüfstück 1 mit der Nasswaage-Einrichtung 4 gewogen wird. Zweckmäßigerweise ist der Messautomat 10 ausgebildet, das erste Festkörper-Prüfstück 1 in dem ersten Prüfstück-Träger 16 mittels der Zuführeinheit 6 zu der Nasswaage-Einrichtung 4 zu verfahren, zweckmäßigerweise durch ein Bewegen des Greifers 47 in einer x-Richtung und/oder einer y-Richtung. Zweckmäßigerweise ist der Messautomat 10 ferner ausgebildet, mittels der Zuführeinheit 6 den ersten Prüfstück-Träger 16 in das Becken 21, insbesondere die Flüssigkeit 19, abzusenken. Zweckmäßigerweise greift beim Absenken des ersten Prüfstück-Trägers 16 die erste Prüfstück-Hebestruktur 24 in den Aufnahmebereich des ersten Prüfstück-Trägers 16 und hebt das erste Festkörper-Prüfstück 1 gegenüber dem ersten Prüfstück-Träger 16 an. Die von dem ersten Festkörper-Prüfstück 1 auf die erste Prüfstück-Hebestruktur 24 ausgeübte Kraft wird über die Kraftübertragungsstruktur 23 auf den ersten Kraftaufnahmeabschnitt übertragen und von der ersten Waageeinheit 22 als Nasswäge-Messwert erfasst.

Zweckmäßigerweise ist der Messautomat 10 ausgebildet, nach dem Eintauchen des ersten Prüfstück-Trägers 16 in die Flüssigkeit 19 eine Regelung des Flüssigkeitspegels des Beckens 21 durchzuführen. Zweckmäßigerweise wird die Regelung des Flüssigkeitspegels vor der Erfassung des Nasswäge-Messwerts durchgeführt. Insbesondere wird die Regelung des Flüssigkeitspegels durchgeführt, bevor das erste Festkörper-Prüfstück 1 auf die erste Prüfstück-Hebestruktur 24 abgesenkt wird. Zweckmäßigerweise ist der Messautomat 10 ausgebildet, nach der Regelung des Flüssigkeitspegels und vor dem Absenken des ersten Festkörper-Prüfstücks 1 auf die erste Prüfstück-Hebestruktur 24 die erste Waageeinheit 22 zu nullen.

Die Mess-Unterprozedur 40 umfasst ferner den Schritt UP4, bei dem auf Basis des Trockenwäge-Messwerts und des Nasswäge-Messwerts der Dichtewert des ersten Festkörper-Prüfstücks 1 berechnet wird. Insbesondere ist der Messautomat 10 ausgebildet, den Dichtewert gemäß dem archimedischen Prinzip zu berechnen. Der Messautomat 10 stellt den berechneten Dichtwert zweckmäßigerweise als Dichteinformation bereit.

Die Mess-Unterprozedur 40 umfasst ferner den Schritt UP5, bei dem die Zuführeinheit 6 den ersten Prüfstück-Träger 16 zurück in das Prüfstück-Magazin 5 ablegt. Zweckmäßigerweise ist der Messautomat 10 ausgebildet, mittels der Zuführeinheit 6 automatisiert den ersten Prüfstück-Träger 16 zurück in das Prüfstück-Magazin 5 abzulegen, beispielsweise indem der Greifer 47 automatisiert zu dem Prüfstück-Magazin 5 gefahren wird, den ersten Prüfstück-Träger 16 in den Aufnahmeabschnitt 62 absenkt und den Eingriff mit dem ersten Prüfstück-Träger 16 löst, insbesondere durch eine Drehbewegung des Greifers 47.

Der Schritt UP5 kann zweckmäßigerweise auch vor dem Schritt UP4 oder parallel zu dem Schritt UP4 erfolgen.

Zweckmäßigerweise ist der Messautomat 10 ausgebildet, die Schritte der Mess-Unterprozedur 40 vollautomatisiert - also ohne Benutzereingriff - durchzuführen. Zweckmäßigerweise ist der Messautomat 10 ausgebildet, die Mess-Unterprozedur für ein Festkörper-Prüfstück 1 in zwei Minuten oder weniger durchzuführen.

Das Verfahren 30 fährt nun fort mit dem Schritt P3, bei dem der Messautomat 10 das nächste zu messende (zweite) Festkörper-Prüfstück 1 auswählt. Das Verfahren führt dann eine weitere Mess-Unterprozedur 40 durch, und zwar für einen zweiten Prüfstück-Träger 16, in dem sich das als nächste zu messende (zweite) Festkörper-Prüfstück 1 befindet.

Der Messautomat 10 ist zweckmäßigerweise ausgebildet, die Mess-Unterprozedur 40 solange für weitere zu messende Festkörper-Prüfstücke 1 durchzuführen, bis für sämtlich in dem Festkörper-Magazin 5 gelagerte Festkörper-Prüfstücke 1 und/oder für sämtliche durch die Auswahlinformation angezeigte Festkörper-Prüfstücke 1 die Dichte bestimmt wurde.

Das Verfahren 30 fährt dann mit dem Schritt P4 fort, bei dem das Verfahren 30 beendet wird. Beispielsweise werden beim Schritt P4 die Festkörper-Prüfstücke 1 aus dem Messautomaten 10 entnommen und/oder exemplarisch gemäß der erhaltenen Dichtewerte sortiert, insbesondere automatisiert.

**Patentansprüche**

1.  Messautomat (10) zur automatisierten Bestimmung der jeweiligen Dichte einer Mehrzahl von Festkörper-Prüfstücken (1), umfassend:

    - eine Messanordnung (2) mit einer Trockenwaage-Einrichtung (3) und einer Nasswaage-Einrichtung (4),
    - ein Prüfstück-Magazin (5) zur Aufnahme der Mehrzahl von Festkörper-Prüfstücken (1), und
    - eine Zuführeinheit (6) zum Zuführen der Festkörper-Prüfstücke (1) von dem Prüfstück-Magazin (5) zu der Messanordnung (2), wobei
    - der Messautomat (10) ausgebildet ist, mit der Zuführeinheit (6) sequentiell die Festkörper-Prüfstücke (1) der Messanordnung (2) zuzuführen, unter Verwendung der Trockenwaage-Einrichtung (3) und der Nasswaage-Einrichtung (4) die Festkörper-Prüfstücke (1) zu wiegen, um für jedes Festkörper-Prüfstück (1) jeweilige Wäge-Messwerte zu erhalten und für jedes Festkörper-Prüfstück (1) auf Basis der jeweiligen Wäge-Messwerte einen jeweiligen Dichtewert zu bestimmen, **dadurch gekennzeichnet, dass**

das Prüfstück-Magazin (5) eine Mehrzahl an Prüfstück-Trägern (16) umfasst, die jeweils zur Aufnahme eines jeweiligen Prüfstücks (1) dienen und wobei die Zuführeinheit (6) ausgebildet ist, die Prüfstück-Träger (16) sequentiell aus dem Prüfstück-Magazin (5) zu entnehmen, um die Prüfstücke (1) im jeweiligen Prüfstück-Träger (16) der Messanordnung (2) zuzuführen.

2.  Messautomat (10) nach Anspruch 1, wobei der Messautomat (10) ausgebildet ist, das Wiegen jedes Prüfstücks (1) unter Verwendung der Trockenwaage-Einrichtung (3) und der Nasswaage-Einrichtung (4) in einem Zustand durchzuführen, in dem sich das Prüfstück (1) innerhalb eines Aufnahmebereichs (17) des jeweiligen Prüfstück-Trägers (16) befindet.

3.  Messautomat (10) nach Anspruch 1 oder 2, wobei die Trockenwaage-Einrichtung (3) und/oder die Nasswaage-Einrichtung (4) jeweils eine Prüfstück-Hebestruktur (18) umfassen, die beim Wiegen eines Festkörper-Prüfstücks (1) in den jeweiligen Prüfstück-Träger (16) greift und, insbesondere beim Absenken des jeweiligen Prüfstück-Trägers (16), ein Anheben des Festkörper-Prüfstück (1) relativ zum Prüfstück-Träger (16) bewirkt.

4.  Messautomat (10) nach einem der Ansprüche 1 bis 3, wobei

    - der Messautomat (10) ein Messautomat-Gehäuse (7) umfasst, das einen Arbeitsraum (8) umgibt, in dem die Messanordnung (2) und das Prüfstück-Magazin (5) angeordnet sind, und/oder
    - der Messautomat (10) eine Schwingungsdämpfungs-Aufhängung (9) umfasst, die die Nasswaage-Einrichtung (4) trägt und ausgebildet ist, aus der Umgebung des Messautomaten (10) stammende mechanische Schwingungen zu dämpfen, um deren Einfluss auf die Wäge-Messwerte zu verringern, wobei vorzugsweise
    - der Messautomat eine Rahmenstruktur (11) umfasst, mit der das Prüfstück-Magazin (5) und die Zuführeinheit (6) gegenüber einem Boden, auf dem der Messautomat (10) steht, abgestützt sind, und wobei die Nasswaage-Einrichtung (4) von der Rahmenstruktur (11) schwingungsentkoppelt ist, und/oder
    - der Messautomat (10) ferner einen Arbeitsraum-Boden (12) umfasst, auf dem das Prüfstück-Magazin (5) steht, wobei der Arbeitsraum-Boden eine Nasswaage-Aussparung (14) umfasst, durch die sich ein Nasswaage-Aufbau erstreckt, der die Schwingungsdämpfungs-Aufhängung (9) und die Nasswaage-Einrichtung (4) umfasst.

**5.** Messautomat (10) nach einem der Ansprüche 1 bis 4, wobei die Nasswaage-Einrichtung (4) ein mit einer Flüssigkeit (19) gefülltes Becken (21), eine außerhalb des Beckens (21) angeordnete erste Waageeinheit (22) und eine von der ersten Waageeinheit (22) in das Becken (21) führende Kraftübertragungsstruktur (23) umfasst, die ausgebildet ist, beim Wiegen eines Festkörper-Prüfstücks (1) mit der Nasswaage-Einrichtung (4) die von dem Festkörper-Prüfstück (1) in der Flüssigkeit (19) auf die Kraftübertragungsstruktur (23) ausgeübte Kraft aus dem Becken (21) auf die erste Waageeinheit (22) zu übertragen.

**6.** Messautomat (10) nach einem der Ansprüche 1 bis 5, wobei die Nasswaage-Einrichtung (4) ein/das Becken (21) umfasst sowie eine in dem Becken (21) angeordnete erste Prüfstück-Hebestruktur (24), die beim Wiegen eines Festkörper-Prüfstücks (1) in einen jeweiligen Prüfstück-Träger (16) greift und, insbesondere beim Absenken des jeweiligen Prüfstück-Trägers (16), ein Anheben des Festkörper-Prüfstücks (1) relativ zu dem Prüfstück-Träger (16) bewirkt.

**7.** Messautomat (10) nach einem der Ansprüche 1 bis 6, wobei die Nasswaage-Einrichtung (4) ein/das Becken (21) umfasst sowie eine Flüssigkeitspegel-Regeleinrichtung (25) zur Regelung des Flüssigkeitspegels des Beckens (21).

**8.** Messautomat (10) nach Anspruch 7, wobei der Messautomat (10) ausgebildet ist, zum Wiegen des Festkörper-Prüfstücks (1) mit der Nasswaage-Einrichtung (4) das Festkörper-Prüfstück (1) zusammen mit einem/dem jeweiligen Prüfstück-Träger (16) in die Flüssigkeit (19) des Beckens (21) einzutauchen und nach dem Eintauchen des Prüfstück-Trägers (16) die Regelung des Flüssigkeitspegels durchzuführen.

**9.** Messautomat (10) nach einem der Ansprüche 1 bis 8, wobei die Nasswaage-Einrichtung (4) ein/das Becken (21) umfasst und einer/der Flüssigkeit (19), mit der das Becken (21) gefüllt ist, ein Tensid beigemischt ist.

**10.** Messautomat (10) nach einem der Ansprüche 1 bis 9, wobei der Messautomat (10) ausgebildet ist, auf Basis einer Auswahlinformation, die eine oder mehrere Prüfstück-Plätze des Prüfstück-Magazins (5) anzeigt, die Bestimmung der Dichte für diejenigen Festkörper-Prüfstücke (1) durchzuführen, die sich an den Prüfstück-Plätzen befinden, die durch die Auswahlinformation angezeigt werden.

**11.** Messautomat (10) nach Anspruch 10, wobei der Messautomat (10) eine Schnittstelle (26), insbesondere eine Benutzerschnittstelle, zur Eingabe der Auswahlinformation umfasst.

**12.** Messautomat (10) nach eine der Ansprüche 1 bis 11, wobei im Prüfstück-Magazin (5) eine Mehrzahl von mittels additiver Fertigung hergestellter Festkörper-Prüfstücke (1) angeordnet sind und/oder wobei der Messautomat (10) ausgebildet ist, auf Basis der bestimmten Dichtewerte jeweils die Fertigungsqualität des jeweiligen Festkörper-Prüfstücks (1) zu beurteilen und eine Beurteilungsinformation bereitzustellen.

**13.** Fertigungsanlage (20), umfassend eine Fertigungshalle (27), eine in der Fertigungshalle (27) angeordnete Fertigungsvorrichtung (28) zur Fertigung von Festkörper-Prüfstücken (1) sowie ein in der Fertigungshalle angeordneter Messautomat (10) nach einem der Ansprüche 1 bis 12.

**14.** Verfahren (30) zum automatisierten Bestimmen der jeweiligen Dichte einer Mehrzahl von Festkörper-Prüfstücken (1), wobei das Verfahren mit einem Messautomaten (10) nach einem der Ansprüche 1 bis 12 durchgeführt wird, umfassend die Schritte:

- Zuführen, mittels einer Zuführeinheit (6), der Festkörper-Prüfstücke (1) von einem Prüfstück-Magazin (5) zu einer Messanordnung (2), die eine Trockenwaage-Einrichtung (3) und eine Nasswaage-Einrichtung (4) umfasst,
- Wiegen der Festkörper-Prüfstücke (1) unter Verwendung der Trockenwaage-Einrichtung (3) und der Nasswaage-Einrichtung (4), um für jedes Festkörper-Prüfstück (1) jeweilige Wäge-Messwerte zu erhalten, und
- Bestimmen für jedes Festkörper-Prüfstück (1) eines jeweiligen Dichtewerts auf Basis der jeweiligen Wäge-Messwerte.

**15.** Verfahren zur Beurteilung der Fertigungsqualität eines mittels eines additiven Verfahrens hergestellten Festkörper-Prüfstücks (1), wobei das Verfahren mit einem Messautomaten (10) nach einem der Ansprüche 1 bis 12 durchgeführt wird, umfassend die Schritte: Wiegen des Festkörper-Prüfstücks (1) mit einer Trockenwaage-Einrichtung (3) und einer Nasswaage-Einrichtung (4), um Wäge-Messwerte zu erhalten, Beurteilen der Fertigungsqualität des Festkörper-Prüfstücks (1) auf Basis der Wäge-Messwerte und Bereitstellen einer Beurteilungsinformation über die Fertigungsqualität des Festkörper-Prüfstücks (1).

**Claims**

**1.** Automatic measuring machine (10) for automated determination of a respective density of a plurality of solid-state test pieces (1), comprising:

- a measuring arrangement (2) with a dry weighing device (3) and a wet weighing device (4),
- a test piece magazine (5) for holding the plurality of solid-state test pieces (1), and
- a feeding unit (6) for feeding the solid-state test pieces (1) from the test piece magazine (5) to the measuring arrangement (2), wherein
- the automatic measuring machine (10) is configured to sequentially feed the solid-state test pieces (1) to the measuring arrangement (2) by means of the feeding unit (6), to weigh the solid-state test pieces (1) using the dry weighing device (3) and the wet weighing device (4) in order to obtain respective weighing measurement values for each solid-state test piece (1) and to determine a respective density value for each solid-state test piece (1) on the basis of the respective weighing measurement values, **characterized in that** the test piece magazine (5) comprises a plurality of test piece carriers (16), which each serve to hold a respective test piece (1), and wherein the feeding unit (6) is configured to sequentially take the test piece carriers (16) out of the test piece magazine (5) in order to feed the test pieces (1) in the respective test piece carrier (16) to the measuring arrangement (2).

2. Automatic measuring machine (10) according to claim 1, wherein the automatic measuring machine (10) is configured to perform weighing of each test piece (1) using the dry weighing device (3) and the wet weighing device (4) in a state in which the test piece (1) is within a receiving area (17) of the respective test piece carrier (16).

3. Automatic measuring machine (10) according to claim 1 or 2, wherein the dry weighing device (3) and/or the wet weighing device (4) each comprise a test piece lifting structure (18) which, for weighing a solid-state test piece (1), penetrates into the respective test piece carrier (16) and, in particular when the respective test piece carrier (16) is lowered, causes the solid-state test piece (1) to be lifted relative to the test piece carrier (16).

4. Automatic measuring machine (10) according to one of claims 1 to 3, wherein

- the automatic measuring machine (10) comprises a measuring machine housing (7) surrounding a working chamber (8) in which the measuring arrangement (2) and the test piece magazine (5) are arranged, and/or
- the automatic measuring machine (10) comprises a vibration damping suspension (9) which supports the wet weighing device (4) and is designed to damp mechanical vibrations originating from the environment of the automatic measuring machine (10) in order to reduce their influence on the weighing measurement values, wherein preferably
- the automatic measuring machine comprises a frame structure (11) with which the test piece magazine (5) and the feeding unit (6) are supported relative to a floor on which the automatic measuring machine (10) stands, and wherein the wet weighing device (4) is vibration-decoupled from the frame structure (11), and/or
- the automatic measuring machine comprises a working chamber floor (12) on which the test piece magazine (5) stands, wherein the working chamber floor comprises a wet weighing opening (14) through which extends a wet weighing assembly comprising the vibration damping suspension (9) and the wet weighing device (4).

5. Automatic measuring machine (10) according to one of claims 1 to 4, wherein the wet weighing device (4) comprises a basin (21) filled with a liquid (19), a first weighing unit (22) arranged outside the basin (21) and a force transmission structure (23) leading from the first weighing unit (22) into the basin (21), which force transmission structure (23) is adapted, when weighing a solid-state test piece (1) with the wet weighing device (4), to transmit a force, which is exerted by the solid-state test piece (1) in the liquid (19) on the force transmission structure (23), from the basin (21) to the first weighing unit (22).

6. Automatic measuring machine (10) according to one of claims 1 to 5, wherein the wet weighing device (4) comprises a/the basin (21) as well as a first test piece lifting structure (24) arranged in the basin (21), which first test piece lifting structure (24), when weighing a solid-state test piece (1), penetrates into a respective test piece carrier (16) and, in particular when lowering the respective test piece carrier (16), causes the solid-state test piece (1) to be lifted relative to the test piece carrier (16).

7. Automatic measuring machine (10) according to one of claims 1 to 6, wherein the wet weighing device (4) comprises a/the basin (21) and a liquid level closed loop control device (25) for closed loop controlling the liquid level of the basin (21).

8. Automatic measuring machine (10) according to claim 7, wherein the automatic measuring machine (10) is configured, for weighing the solid-state test piece (1) with the wet weighing device (4), to immerse the solid-state test piece (1) together with a/the respective test piece carrier (16) in the liquid (19) of the basin (21) and to carry out the closed-loop control of the liquid level after the immersion of the test piece carrier (16).

9. Automatic measuring machine (10) according to one claims 1 to 8, wherein the wet weighing device (4) comprises a/the basin (21) and a surfactant is admixed to a/the liquid (19) with which the basin (21) is filled.

10. Automatic measuring machine (10) according to one of claims 1 to 9, wherein the automatic measuring machine (10) is adapted to perform, based on selection information indicating one or more test piece places of the test piece magazine (5), determination of density for those solid-state test pieces (1) which are located at test the piece places indicated by the selection information.

11. Automatic measuring machine (10) according to claim 10, wherein the automatic measuring machine (10) comprises an interface (26), in particular a user interface, for inputting the selection information.

12. Automatic measuring machine (10) according to one of claims 1 to 11, wherein a plurality of solid-state test pieces (1) manufactured by means of additive manufacturing are arranged in the test piece magazine (5) and/or wherein the automatic measuring machine (10) is configured to judge, on the basis of the determined density values, a manufacturing quality of the respective solid-state test piece (1) and to provide judgment information.

13. Manufacturing facility (20) comprising a manufacturing hall (27), a manufacturing device (28) for manufacturing solid-state test pieces (1), the manufacturing device (28) being arranged in the manufacturing hall (27), and an automatic measuring machine (10) according to one of claims 1 to 12 arranged in the manufacturing hall.

14. Method (30) for automated determination of a respective density of a plurality of solid-state test pieces (1), wherein the method is performed with an automatic measuring machine (10) according to one of the claims 1 to 12, comprising the steps:

   - Feeding, by means of a feeding unit (6), the solid-state test pieces (1) from a test piece magazine (5) to a measuring arrangement (2) comprising a dry weighing device (3) and a wet weighing device (4),
   - weighing the solid-state test pieces (1) using the dry weighing device (3) and the wet weighing device (4) to obtain respective weighing measurement values for each solid-state test piece (1), and

   - determining for each solid-state test piece (1) a respective density value based on the respective weighing measurement values.

15. Method of evaluating the manufacturing quality of a solid-state test piece (1) manufactured by additive manufacturing, wherein the method is performed with an automatic measuring machine (10) according to one of the claims 1 to 12, comprising the steps of: weighing the solid-state test piece (1) with a dry weighing device (3) and a wet weighing device (4) to obtain weighing measurement values, judging the manufacturing quality of the solid-state test piece (1) on the basis of the weighing measurement values, and providing judgment information on the manufacturing quality of the solid-state test piece (1).

**Revendications**

1. Appareil automatique de mesure (10) pour la détermination automatisée de l'épaisseur respective d'une pluralité de pièces d'essai de corps solide (1) comprenant :

   - un ensemble de mesure (2) avec un dispositif de pesage en milieu sec (3) et un dispositif de pesage en milieu humide (4),
   - un magasin de pièces d'essai (5) pour la réception de la pluralité de pièces d'essai de corps solide (1), et
   - une unité d'alimentation (6) pour alimenter l'ensemble de mesure (2) en pièces d'essai de corps solide (1) du magasin de pièces d'essai (5), dans lequel
   - l'appareil automatique de mesure (10) est réalisé afin d'alimenter avec l'unité d'alimentation (6) séquentiellement en pièces d'essai de corps solide (1) l'ensemble de mesure (2), de peser les pièces d'essai de corps solide (1) en utilisant le dispositif de pesage en milieu sec (3) et le dispositif de pesage en milieu humide (4) afin de recevoir pour chaque pièce d'essai de corps solide (1) des valeurs de mesure par pesée respectives et de déterminer une valeur d'épaisseur respective pour chaque pièce d'essai de corps solide (1) sur la base des valeurs de mesure par pesée respectives, **caractérisé en ce que** le magasin de pièces d'essai (5) comprend une pluralité de supports de pièce d'essai (16) qui servent respectivement à la réception d'une pièce d'essai (1) respective et dans lequel l'unité d'alimentation (6) est réalisée afin de retirer les supports de pièce d'essai (16) séquentiellement du magasin de pièces d'essai (5) afin d'alimenter l'ensemble de mesure (2) en pièces d'essai (1) dans le support de pièce d'essai (16) respectif.

**2.** Appareil automatique de mesure (10) selon la revendication 1, dans lequel l'appareil automatique de mesure (10) est réalisé afin de réaliser la pesée de chaque pièce d'essai (1) en utilisant le dispositif de pesage en milieu sec (3) et le dispositif de pesage en milieu humide (4) dans un état, dans lequel la pièce d'essai (1) se trouve à l'intérieur d'une zone de réception (17) du support de pièce d'essai (16) respectif.

**3.** Appareil automatique de mesure (10) selon la revendication 1 ou 2, dans lequel le dispositif de pesage en milieu sec (3) et/ou le dispositif de pesage en milieu humide (4) comprennent respectivement une structure de levage de pièce d'essai (18) qui s'engage lors de la pesée d'une pièce d'essai de corps solide (1) dans les supports de pièce d'essai (16) respectifs et, en particulier lors de l'abaissement du support de pièce d'essai (16) respectif, provoque un levage de la pièce d'essai de corps solide (1) par rapport au support de pièce d'essai (16).

**4.** Appareil automatique de mesure (10) selon l'une quelconque des revendications 1 à 3, dans lequel

- l'appareil automatique de mesure (10) comprend un boîtier d'appareil automatique de mesure (7) qui entoure un espace de travail (8), dans lequel l'ensemble de mesure (2) et le magasin de pièces d'essai (5) sont agencés, et/ou
- l'appareil automatique de mesure (10) comprend une suspension d'amortissement d'oscillation (9) qui porte le dispositif de pesage en milieu humide (4) et est réalisée afin d'amortir des oscillations mécaniques provenant de l'environnement de l'appareil automatique de mesure (10) afin de diminuer leur influence sur les valeurs de mesure par pesée, dans lequel de préférence
- l'appareil automatique de mesure comprend une structure de cadre (11), avec laquelle le magasin de pièces d'essai (5) et l'unité d'alimentation (6) sont en appui par rapport à un fond, sur lequel l'appareil automatique de mesure (10) se trouve, et dans lequel le dispositif de pesage en milieu humide (4) est découplé en oscillation de la structure de cadre (11), et/ou
- l'appareil automatique de mesure (10) comprend de plus un fond d'espace de travail (12), sur lequel le magasin de pièce d'essai (5) se trouve, dans lequel le fond d'espace de travail comprend un évidement de pesage en milieu humide (14), par lequel une structure de pesage en milieu humide s'étend, laquelle comprend la suspension d'amortissement d'oscillation (9) et le dispositif de pesage en milieu humide (4).

**5.** Appareil automatique de mesure (10) selon l'une quelconque des revendications 1 à 4, dans lequel le dispositif de pesage en milieu humide (4) comprend une cuvette (21) remplie d'un liquide (19), une première unité de pesage (22) agencée en dehors de la cuvette (21) et une structure de transmission de force (23) menant de la première unité de pesage (22) dans la cuvette (21), structure qui est réalisée afin de transmettre lors de la pesée d'une pièce d'essai de corps solide (1) avec le dispositif de pesage en milieu humide (4) la force exercée par la pièce d'essai de corps solide (1) dans le liquide (19) sur la structure de transmission de force (23) de la cuvette (21) à la première unité de pesage (22).

**6.** Appareil automatique de mesure (10) selon l'une quelconque des revendications 1 à 5, dans lequel le dispositif de pesage en milieu humide (4) comprend une/la cuvette (21) ainsi qu'une première structure de levage de pièce d'essai (24) agencée dans la cuvette (21) qui s'engage lors de la pesée d'une pièce d'essai de corps solide (1) dans un support de pièce d'essai (16) respectif et, en particulier lors de l'abaissement du support de pièce d'essai (16) respectif, provoque un levage de la pièce d'essai de corps solide (1) par rapport au support de pièce d'essai (16).

**7.** Appareil automatique de mesure (10) selon l'une quelconque des revendications 1 à 6, dans lequel le dispositif de pesage en milieu humide (4) comprend une/la cuvette (21) ainsi qu'un dispositif de régulation de niveau de liquide (25) pour la régulation du niveau de liquide de la cuvette (21).

**8.** Appareil automatique de mesure (10) selon la revendication 7, dans lequel l'appareil automatique de mesure (10) est réalisé afin d'immerger pour la pesée de la pièce d'essai de corps solide (1) avec le dispositif de pesage en milieu humide (4) la pièce d'essai de corps solide (1) conjointement avec un/le support de pièce d'essai (16) respectif dans le liquide (19) de la cuvette (21) et de réaliser la régulation du niveau de liquide après l'immersion du support de pièce d'essai (16).

**9.** Appareil automatique de mesure (10) selon l'une quelconque des revendications 1 à 8, dans lequel le dispositif de pesage en milieu humide (4) comprend une/la cuvette (21) et un tensioactif est mélangé à un/au liquide (19), avec lequel est remplie la cuvette (21).

**10.** Appareil automatique de mesure (10) selon l'une quelconque des revendications 1 à 9, dans lequel l'appareil automatique de mesure (10) est réalisé afin de réaliser sur la base d'une information de sélection qui indique un ou plusieurs emplacements de pièce d'essai du magasin de pièces d'essai (5), la détermination de l'épaisseur pour les pièces d'essai de corps solide (1) qui se trouvent au niveau des emplacements de pièce d'essai qui sont indiqués par l'information de sélection.

11. Appareil automatique de mesure (10) selon la revendication 10, dans lequel l'appareil automatique de mesure (10) comprend une interface (26), en particulier une interface utilisateur, pour la saisie de l'information de sélection.

12. Appareil automatique de mesure (10) selon l'une quelconque des revendications 1 à 11, dans lequel une pluralité de pièces d'essai de corps solide (1) fabriquées au moyen de la fabrication additive est agencée dans le magasin de pièces d'essai (5) et/ou dans lequel l'appareil automatique de mesure (10) est réalisé afin de juger sur la base des valeurs d'épaisseur déterminées respectivement la qualité de fabrication de la pièce d'essai de corps solide (1) respective et de fournir une information de jugement.

13. Installation de fabrication (20) comprenant un hall de fabrication (27), un dispositif de fabrication (28) agencé dans le hall de fabrication (27) pour la fabrication de pièces d'essai de corps solide (1) ainsi qu'un appareil automatique de mesure (10) agencé dans le hall de fabrication selon l'une quelconque des revendications 1 à 12.

14. Procédé (30) de détermination automatisée de l'épaisseur respective d'une pluralité de pièces d'essai de corps solide (1), dans lequel le procédé est réalisé avec un appareil automatique de mesure (10) selon l'une quelconque des revendications 1 à 12, comprenant les étapes consistant à :

- alimenter, au moyen d'une unité d'alimentation (6), en pièces d'essai de corps solide (1) d'un magasin de pièces d'essai (5) un ensemble de mesure (2) qui comprend un dispositif de pesage en milieu sec (3) et un dispositif de pesage en milieu humide (4),
- peser des pièces d'essai de corps solide (1) en utilisant le dispositif de pesage en milieu sec (3) et le dispositif de pesage en milieu humide (4) afin de recevoir pour chaque pièce d'essai de corps solide (1) des valeurs de mesure par pesée respectives, et
- déterminer pour chaque pièce d'essai de corps solide (1) une valeur d'épaisseur respective sur la base des valeurs de mesure par pesée respectives.

15. Procédé de jugement de la qualité de fabrication d'une pièce d'essai de corps solide (1) fabriquée au moyen d'un procédé additif, dans lequel le procédé est réalisé avec un appareil automatique de mesure (10) selon l'une quelconque des revendications 1 à 12, comprenant les étapes suivantes : la pesée de la pièce d'essai de corps solide (1) avec un dispositif de pesage en milieu sec (3) et un dispositif de pesage en milieu humide (4) afin de recevoir des valeurs de mesure par pesée, le jugement de la qualité de fabrication de la pièce d'essai de corps solide (1) sur la base des valeurs de mesure de pesée et la fourniture d'une information de jugement sur la qualité de fabrication de la pièce d'essai de corps solide (1).

Fig. 1

Fig. 2

33, 38  41  7  43  31  41  34, 39

10

6

2, 4, 15

16

18

8

26

2, 3

5  11  12

42  43  42

z
x

20

EP 4 045 889 B1

Fig. 3

Fig. 4

EP 4 045 889 B1

Fig. 5

Fig. 6

Fig. 7

Fig. 8

## Fig. 9

Fig. 10

Fig. 11

Fig. 12

EP 4 045 889 B1

Fig. 13

Fig. 14

Fig. 15

20

27

10

98

28

Fig. 16

Fig. 17

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5606126 A

- CN 109883881 A